# EUROPEAN PATENT SPECIFICATION

(11) **EP 4 339 764 B1**
(45) Date of publication and mention of the grant of the patent: **02.12.2026**
(21) Application number: 23197398.3
(22) Date of filing: 14.09.2023
(51) Int. Cl.: G06F 3/12

(54) **DEVICE FOR GENERATING PROCESSING JOB, SHEET PROCESSING SYSTEM, AND PROCESSING JOB GENERATION PROGRAM**
VORRICHTUNG ZUR ERZEUGUNG EINES VERARBEITUNGSAUFTRAGS, BLATTVERARBEITUNGSSYSTEM UND VERARBEITUNGSAUFTRAGSERZEUGUNGSPROGRAMM
DISPOSITIF DE GÉNÉRATION DE TÂCHE DE TRAITEMENT, SYSTÈME DE TRAITEMENT DE FEUILLE ET PROGRAMME DE GÉNÉRATION DE TÂCHE DE TRAITEMENT

(30) Priority: 16.09.2022 JP 2022148446
(43) Date of publication of application: 20.03.2024
(73) Proprietor: Duplo Seiko Corporation, Kinokawa-shi, Wakayama 649-6551 (JP)
(72) Inventor: YAMADA, Kenta, Wakayama, 649-6551 (JP)
(74) Representative: Mewburn Ellis LLP

(56) References cited:
- US-A1- 2007 253 029
- US-A1- 2022 088 815
- US-B1- 11 210 043

## Description

### TECHNICAL FIELD

The present disclosure relates to a device for generating processing job, a sheet processing system, and a processing job generation program.

### BACKGROUND ART

Conventionally, there is known a sheet processing system that cuts and takes out, from a sheet, a product such as a ticket printed on the sheet. For example, Patent Document 1 describes an apparatus that cuts a large-sized sheet on which products (single sheets) are printed with a first machining device (first sheet cutting device), and cuts a processed sheet having a reduced size into individual products with a second machining device (second sheet cutting device).
US2022/088815A1 discloses a machining data generation apparatus that is used in a sheet process system, which executes a plurality of times of processes by using one or more sheet process apparatuses processing a sheet by performing one or more times of machining and obtains a product in a desired form from the sheet, and generates machining data for operating the sheet process apparatus, and the machining data generation apparatus includes a machining condition input unit that inputs a machining condition for obtaining the product in a desired form from the sheet; a data generation unit that generates the machining data including each machining data piece for operating the sheet process apparatus in order to execute each process in the plurality of times of processes, on the basis of the input machining condition; and a data output unit that outputs the generated machining data to the sheet process apparatus that executes each process.

### Patent Documents

Patent Document 1: JP 2022-35429 A

### SUMMARY

### Problems to be Solved by the Invention

The first machining device and the second machining device process a sheet according to a set processing job. It is desired to complete the sheet processing in a shorter time by improving the processing efficiency of the sheet.

Therefore, an object of the present disclosure is to provide a device for generating processing job and a processing job generation program that improve the processing efficiency of a sheet, and a sheet processing system including the device for generating processing job.

### Solutions to the Problems

A device for generating processing job of the present disclosure is as specified in claim 1.

The device for generating processing job may optionally be as specified in any of claims 2 to 6.

A sheet processing system of the present disclosure is as specified in claim 7. The sheet processing system may optionally be as specified in any of claims 8 to 13.

A processing job generation program according to the present disclosure is as specified in claim 14.

### Effects of the Invention

According to the present disclosure, it is possible to provide a device for generating processing job and a processing job generation program that improve the processing efficiency of a sheet, and a sheet processing system including the device for generating processing job.

### BRIEF DESCRIPTION OF DRAWINGS

Fig. 1 is a plan view illustrating an overall configuration of a sheet processing system according to an embodiment;
Fig. 2 is a block diagram illustrating a configuration of a device for generating processing job;
Fig. 3 is an explanatory diagram for explaining an example of first layout information;
Fig. 4 is an explanatory diagram for explaining an example of second layout information;
Fig. 5 is an explanatory diagram for explaining a search for cutting position candidates;
Fig. 6 is an explanatory diagram for explaining a search for cutting position candidates;
Fig. 7 is an explanatory diagram for explaining a search for cutting position candidates;
Fig. 8 is an explanatory diagram for explaining a search for cutting position candidates;
Fig. 9 is an explanatory view for explaining an example of imposition;
Fig. 10 is a flowchart illustrating a flow of generating a processing job;
Fig. 11 is a flowchart illustrating a flow of generating a processing job;
Fig. 12 is an explanatory diagram for explaining a search for cutting position candidates;
Fig. 13 is an explanatory diagram for explaining a search for cutting position candidates;
Fig. 14 is an explanatory diagram illustrating an example of newly created third layout information;
Fig. 15 is an explanatory diagram illustrating an example of first layout information;
Fig. 16A is an explanatory diagram illustrating an example of newly created fifth layout information;
Fig. 16B is an explanatory diagram illustrating an example of newly created sixth layout information;
Fig. 17 is an explanatory diagram for explaining a search for cutting position candidates; and
Fig. 18 is an explanatory diagram for explaining adjustment of positions of cutting position candidates.

### DETAILED DESCRIPTION

According to a first aspect of the present disclosure, a device for generating processing job is a device for generating processing job in a sheet processing system including: a first machining device that conveys a sheet on which at least one product is disposed in a first direction that is a conveyance direction of the first machining device, cuts the sheet at at least one cutting position according to a processing job, and discharges an intermediate sheet; and a second machining device that processes the intermediate sheet discharged from the first machining device according to the processing job, and discharges a product, the device for generating processing job generating the processing job that gives an instruction on processing contents to be performed by each of the first machining device and the second machining device. The device for generating processing job searches for at least one candidate for the cutting position based on layout information that is information regarding a position of the product disposed on the sheet, and generates a processing job in which the first machining device and the second machining device perform processing at a cutting position at which a candidate having a small number of cutting positions is selected from among the at least one candidate for the cutting position based on a maximum size of a first margin region between a contour of the sheet and a contour of the product in the first direction, the first margin region being dischargeable by the first machining device, and a maximum size and a minimum size of the intermediate sheet in the first direction, the intermediate sheet being conveyable by the second machining device.

By reducing the number of times of cutting by the first machining device that stops and cuts the sheet, the time required for processing of the entire sheet processing system can be shortened, and wear of a cutting blade of the first machining device can be suppressed.

According to a second aspect of the present disclosure, a device for generating processing job is a device for generating processing job in a sheet processing system including: a first machining device that conveys a sheet on which at least one product is disposed in a first direction that is a conveyance direction of the first machining device, cuts the sheet at at least one cutting position according to a processing job, and discharges an intermediate sheet; and a second machining device that processes the intermediate sheet discharged from the first machining device according to the processing job, and discharges a product, the device for generating processing job generating the processing job that gives an instruction on processing contents to be performed by each of the first machining device and the second machining device. In a case where the sheet is divided into a plurality of the intermediate sheets in the first machining device, based on layout information that is given and is information regarding a position of the product disposed on the sheet, a maximum size and a minimum size of the intermediate sheets in the first direction, the intermediate sheets being conveyable by the second machining device, a maximum size and a minimum size in the first direction of a second margin region between a contour of the intermediate sheets that can be processed by the second machining device and a contour of the product, and a size of the product, the device for generating processing job creates new layout information. The device for generating processing job searches for at least one candidate for the cutting position on the basis of the new layout information, and generates a processing job in which the first machining device and the second machining device perform processing at a cutting position at which a candidate having a small number of cutting positions is selected from among the at least one candidate for the cutting position on the basis of a maximum size of a first margin region between a contour of the sheet and a contour of the product in the first direction, the first margin region being dischargeable by the first machining device, and a maximum size and a minimum size of the intermediate sheets in the first direction, the intermediate sheets being conveyable by the second machining device.

By newly creating the layout information on the basis of the layout information, the maximum size and the minimum size of the intermediate sheets, the maximum size and the minimum size of the second margin region in the first direction, and the size of the product, the number of times of cutting by the first machining device is reduced, and by setting the margin size of the intermediate sheets to a size that can be cut by the second machining device while conveying the intermediate sheets, the time required for processing the entire sheet processing system can be shortened, and wear of the cutting blade of the first machining device can be suppressed.

According to a third aspect of the present disclosure, in the device for generating processing job of the second aspect,
the device for generating processing job generates the layout information such that a layout of each of products on the plurality of intermediate sheets becomes the same among the plurality of intermediate sheets.

By creating the layout information so that the intermediate sheets conveyed to the second machining device have the same layout, it is possible to reduce the adjustment of a position of a cutting blade in the second machining device.

According to a fourth aspect of the present disclosure, in the device for generating processing job according to the first aspect, based on a maximum size in the first direction that can be discharged by the first machining device, a maximum size and a minimum size in the first direction of the intermediate sheet that can be conveyed by the second machining device, and a maximum size and a minimum size in the first direction of a second margin region between a contour of the intermediate sheet that can be processed by the second machining device and a contour of the product, the device for generating processing job selects a candidate having a small number of cutting positions that can be processed by the first machining device and the second machining device from among candidates for the cutting position.

By reducing the number of times of cutting by the first machining device that stops and cuts the sheet within a range that can be processed by the second machining device, the time required for processing of the entire sheet processing system can be shortened, and wear of the cutting blade of the first machining device can be suppressed.

According to a fifth aspect of the present disclosure, a device for generating processing job is a device for generating processing job in a sheet processing system including: a first machining device that conveys a sheet on which at least one product is disposed in a first direction that is a conveyance direction of the first machining device, cuts the sheet at at least one cutting position according to a processing job, and discharges an intermediate sheet; and a second machining device that processes the intermediate sheet discharged from the first machining device according to the processing job, and discharges a product, the device for generating processing job generating the processing job that gives an instruction on processing contents to be performed by each of the first machining device and the second machining device. In a case where a sheet is divided into a plurality of the intermediate sheets in the first machining device, the device for generating processing job creates new layout information on the basis of layout information that is given and is information regarding a position of the product disposed on the sheet, a maximum size and a minimum size of the intermediate sheets that can be conveyed by the second machining device, a maximum size and a minimum size in a first direction of a second margin region of the intermediate sheets that can be processed by the second machining device, a maximum size and a minimum size in the first direction of a third margin region between products disposed on one intermediate sheet that can be processed by the second machining device and disposed at adjacent positions, and a size of the products. The device for generating processing job searches for at least one candidate for the cutting position on the basis of the new layout information, and generates a processing job in which the first machining device and the second machining device perform processing at a cutting position at which a candidate having a small number of cutting positions is selected from among the at least one candidate for the cutting position on the basis of a maximum size in a first direction of a first margin region that can be discharged by the first machining device, a maximum size and a minimum size in the first direction of the intermediate sheets that can be conveyed by the second machining device, and a maximum size and a minimum size in the first direction of a second margin region between contours of the intermediate sheets that can be processed by the second machining device and a contour of the product.

By creating the layout information on the basis of the maximum size and the minimum size of the intermediate sheets, the maximum size and the minimum size of the second margin region in the first direction, the maximum size and the minimum size of the third margin region in the first direction, and the size of the products, the number of times of cutting in the first machining device is reduced, so that the time required for processing of the entire sheet processing system can be shortened, and wear of the cutting blade of the first machining device can be suppressed.

According to a sixth aspect of the present disclosure, in the device for generating processing job of the first aspect, the device for generating processing job generates a processing job in which a cutting position is set between a front end of the sheet and a product on a most front end side in the first direction.

The skew feeding correction of the sheet can be performed by setting the cutting position between the front end of the sheet and the product on the most front end side in the first direction.

According to a seventh aspect of the present disclosure, a sheet processing system includes: a first machining device that processes a sheet on which at least one product is disposed according to a processing job, and discharges an intermediate sheet; a second machining device that processes the intermediate sheet discharged from the first machining device according to the processing job, and discharges a product; and a device for generating processing job that generates the processing job that gives an instruction on processing contents to be performed by each of the first machining device and the second machining device. The first machining device includes: a first conveyance unit that conveys the sheet in a first direction; and a cutter that cuts the sheet conveyed in the first direction at at least one cutting position set as the processing job in a second direction orthogonal to the first direction to divide the sheet into a plurality of the intermediate sheets, or divide the sheet into a margin not including the product and the intermediate sheet including the product. The second machining device includes: a second conveyance unit that conveys the intermediate sheet discharged from the first machining device in the second direction; and a machining apparatus that processes the intermediate sheet conveyed by the second conveyance unit. The device for generating processing job searches for at least one candidate for the cutting position based on layout information that is information regarding a position of a product disposed on the sheet, and generates a processing job in which the first machining device and the second machining device perform processing at a cutting position at which a candidate having a small number of cutting positions is selected from among the at least one candidate for the cutting position based on a maximum size of a first margin region between a contour of the sheet that can be discharged by the first machining device in the first direction and a contour of the product, and a maximum size and a minimum size of the intermediate sheet that can be conveyed by the second machining device in the first direction.

According to an eighth aspect of the present disclosure, a sheet processing system includes: a first machining device that processes a sheet on which at least one product is disposed according to a processing job, and discharges an intermediate sheet; a second machining device that processes the intermediate sheet discharged from the first machining device according to the processing job, and discharges a product; and a device for generating processing job that generates the processing job that gives an instruction on processing contents to be performed by each of the first machining device and the second machining device. The first machining device includes: a first conveyance unit that conveys the sheet in a first direction; and a cutter that cuts the sheet conveyed in the first direction at at least one cutting position set as the processing job in a second direction orthogonal to the first direction to divide the sheet into a plurality of the intermediate sheets, or divide the sheet into a margin not including the product and the intermediate sheet including the product. The second machining device includes: a second conveyance unit that conveys the intermediate sheet discharged from the first machining device in the second direction; and a machining apparatus that processes the intermediate sheet conveyed by the second conveyance unit, and discharges the product. In a case where the sheet is divided into a plurality of the intermediate sheets in the first machining device, based on layout information that is given and is information regarding a position of the product disposed on the sheet, a maximum size and a minimum size of the intermediate sheets in the first direction, the intermediate sheets being conveyable by the second machining device, a maximum size and a minimum size in the first direction of a second margin region between a contour of the intermediate sheets that can be processed by the second machining device and a contour of the product, and a size of the product, the device for generating processing job creates new layout information. The device for generating processing job searches for at least one candidate for the cutting position based on the new layout information, and generates a processing job in which the first machining device and the second machining device perform processing at a cutting position at which a candidate having a small number of cutting positions is selected from among the at least one candidate for the cutting position based on a maximum size of a first margin region between a contour of the sheet that can be discharged by the first machining device in the first direction and a contour of the product, and a maximum size and a minimum size of the intermediate sheet that can be conveyed by the second machining device in the first direction.

According to a ninth aspect of the present disclosure, in the sheet processing system of the eighth aspect, the device for generating processing job generates the layout information such that a layout of each of products on the plurality of intermediate sheets becomes the same among the plurality of intermediate sheets.

According to a tenth aspect of the present disclosure, in the sheet processing system according to the seventh aspect, the device for generating processing job selects a candidate having a small number of cutting positions that can be processed by the first machining device and the second machining device from among the candidates for the cutting position based on a maximum size in the first direction of a first margin region that can be discharged by the first machining device, a maximum size and a minimum size in the first direction of the intermediate sheet that can be conveyed by the second machining device, and a maximum size and a minimum size in the first direction of a second margin region between a contour of the intermediate sheet that can be processed by the second machining device and a contour of the product.

According to an eleventh aspect of the present disclosure, in the sheet processing system according to the seventh aspect, in a case where the sheet is divided into a plurality of the intermediate sheets in the first machining device, based on layout information that is given and is information regarding a position of the product disposed on the sheet, a maximum size and a minimum size of the intermediate sheets that are conveyable by the second machining device, a maximum size and a minimum size in the first direction of the second margin region of the intermediate sheets that can be processed by the second machining device, a maximum size and a minimum size in the first direction of a third margin region between products disposed on the one intermediate sheet that can be processed by the second machining device and disposed at adjacent positions, and a size of the products, the device for generating processing job creates new layout information, searches for at least one candidate for the cutting position based on the new layout information, and generates the processing job.

According to a twelfth aspect of the present disclosure, in the sheet processing system according to any one of the seventh to the eleventh aspects, the device for generating processing job generates a processing job in which a cutting position is set between a front end of the sheet and a product on a most front end side in the first direction.

In the sheet processing system according to a thirteenth aspect of the present disclosure, the cutter includes a first rotary blade that moves in the second direction, and the machining apparatus includes a guillotine type blade that cuts the intermediate sheet conveyed in the second direction in the first direction, and a second rotary blade that cuts the intermediate sheet in the second direction and is positionally adjustable in the first direction.

The second machining device can cut the intermediate sheet along the second direction with the second rotary blade while conveying the intermediate sheet, so that the sheet can be cut more efficiently than the first machining device.

According to a fourteenth aspect of the present disclosure, a processing job generation program is a processing job generation program for causing an integrated circuit to generate, in a sheet processing system including: a first machining device that conveys a sheet on which at least one product is disposed in a first direction that is a conveyance direction of the first machining device, cuts the sheet at at least one cutting position according to a processing job, and discharges an intermediate sheet; and a second machining device that processes the intermediate sheet discharged from the first machining device according to the processing job, and discharges a product, the processing job that gives an instruction on processing contents to be performed by each of the first machining device and the second machining device. The processing job generation program causes the integrated circuit to: search for at least one candidate for the cutting position based on layout information that is information regarding a position of the product disposed on the sheet, and generate a processing job in which the first machining device and the second machining device perform processing at a cutting position at which a candidate having a small number of cutting positions is selected from among the at least one candidate for the cutting position based on a maximum size of a first margin region between a contour of the sheet and a contour of the product in the first direction, the first margin region being dischargeable by the first machining device, and a maximum size and a minimum size of the intermediate sheet in the first direction, the intermediate sheet being conveyable by the second machining device.

By reducing the number of times of cutting by the first machining device that stops and cuts the sheet, the time required for processing of the entire sheet processing system can be shortened, and wear of a cutting blade of the first machining device can be suppressed.

Hereinafter, exemplary embodiments of a component supply device according to the present disclosure will be described with reference to the accompanying drawings. The present disclosure is not limited to the specific configurations of the following embodiments, and configurations based on similar technical ideas are included in the present disclosure.

### [Embodiment]

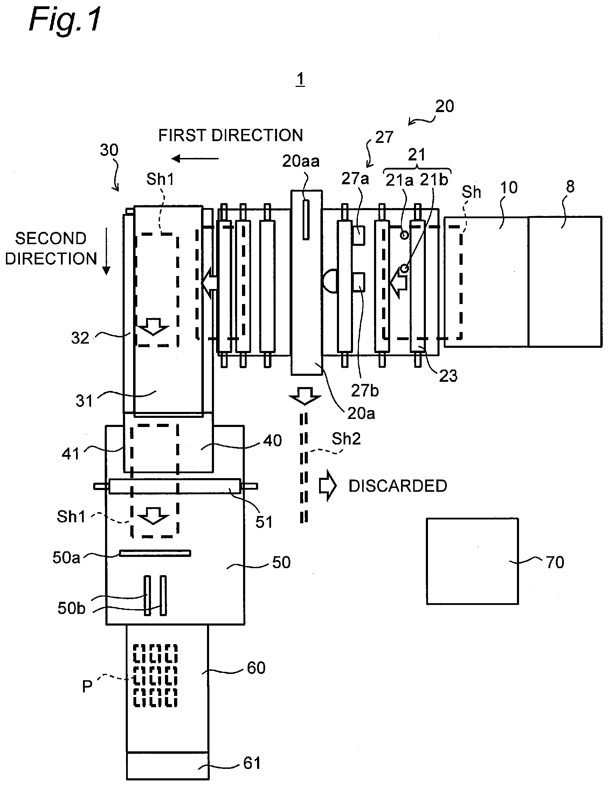

Hereinafter, an embodiment of the present disclosure will be described with reference to Fig. 1. Fig. 1 is a plan view illustrating an overall configuration of a sheet processing system according to an embodiment;.

### [Overall Configuration of Sheet Processing System 1]

A sheet processing system 1 of the present embodiment includes a printing device 8, a sheet feeding device 10, a first machining device 20, a cross conveyor device 30, an insertion unit 40, a second machining device 50, and a conveyor stacker device 60 in this order from the upstream side in the conveyance direction. Furthermore, the sheet processing system 1 includes a device for generating processing job 70 that generates a processing job having contents to be processed by the first machining device 20 and the second machining device 50.

In recent years, the maximum printable sheet size in a general-purpose printing machine tends to increase, and for example, printing sizes exceeding B3 size are also becoming possible in many cases. The present sheet processing system 1 performs processing of receiving a sheet Sh having a size equal to or larger than a certain size printed by the printing device 8, creating an intermediate sheet Sh1 by cutting a margin portion of the printed sheet Sh by the first machining device 20, and leaving only a product P which is a printed portion by the second machining device 50. Note that the first machining device 20 may cut off the margin portion Sh2 on the front end side from the sheet Sh.

The second machining device 50 is a general-purpose sheet cutting device generally used in the market in the related art, and the maximum sheet size that can be processed is, for example, B3 size. Furthermore, the first machining device 20 can process a sheet having a size larger than that of the second machining device 50, and can process a size exceeding B3 size, for example. The present sheet processing system 1 is configured to perform cutting processing to a sheet size that can be received by the second machining device 50 by the first machining device 20, and then deliver the processed sheet to the second machining device 50.

The printing device 8 prints the product P on the sheet Sh based on the layout information. The printed sheet Sh is conveyed to the sheet feeding device 10, and is conveyed to the first machining device 20 as it is or stored in the sheet feeding device 10. Furthermore, the printing device 8 may not be connected to the sheet feeding device 10, and in this case, the printed sheet Sh is conveyed to the sheet feeding device 10 by the operator.

In the present embodiment, the sheet feeding device 10 is configured to be able to feed a sheet having a maximum B2 size. The sheet feeding device 10 conveys the sheet Sh to the first machining device 20, and a driving roller 23 of the first machining device 20 conveys the sheet Sh in the first direction. The first machining device 20 processes the sheet Sh based on the timing at which the front end of the sheet Sh reaches the front end detection sensor 21 of the first machining device 20.

The first machining device 20 is installed to perform cutting processing (primary processing) in advance to a sheet size that can be received by the general-purpose second machining device 50, and includes a front end detection sensor 21 (21a, 21b) that detects that a front end of the sheet Sh conveyed from the sheet feeding device 10 has reached, and a laser sensor 27 (27a, 27b) that detects positions of the front end of the sheet Sh and a register mark provided on the sheet Sh in advance, and detects an inclination angle of the print image with respect to the sheet conveyance direction. Note that the front end detection sensor 21 and the laser sensor 27 are disposed at two locations in the width direction orthogonal to the sheet conveyance direction.

Furthermore, the first machining device 20 includes an angle adjuster capable of adjusting the angle of the cutting mechanism 20a of the cross-cut portion to be perpendicular to the conveyance direction of the print image based on the inclination angle of the print image detected by the laser sensor 27. After stopping the sheet Sh at a preset cutting position, the cutting mechanism 20a cuts the sheet Sh by moving a pair of upper and lower rotary blades 20aa in a width direction orthogonal to a direction in which the sheet Sh is conveyed. The pair of upper and lower rotary blades 20aa of the movable blade unit are disposed to face each other on the upper side and the lower side via a path through which the sheet Sh is conveyed. In this manner, the first machining device 20 cuts the conveyed sheet Sh at the cutting position according to the processing job to separate the sheet Sh into the intermediate sheet Shl and the unnecessary margin portion Sh2. The unnecessary margin portion Sh2 that does not include the product P is discharged from the conveying path and discarded. The cutting position is a cutting line on the sheet Sh where the sheet Sh is cut by the first machining device 20, and may be one or a plurality of cutting positions.

The intermediate sheet Shl after the cutting is discharged to the cross conveyor device 30 by a pair of conveying rollers. The discharge of the intermediate sheet Sh1 is detected by a discharge sensor (not illustrated). Note that, in a case where a guillotine type cutting blade is used as a cutting blade for preliminarily cutting (primary processing) a large-sized sheet Sh, a blade long in the width direction of the sheet is required, which causes problems of warpage and distortion. On the other hand, when a pair of upper and lower rotary blades movable in the sheet conveyance direction is used, the problems of warpage and distortion are solved, which is suitable for the first machining device 20.

The cross conveyor device 30 receives the intermediate sheet Sh1 cut by the first machining device 20 and conveyed in the first direction, conveys the intermediate sheet Sh1 in the second direction intersecting the first direction, and sends the intermediate sheet Sh1 to the second machining device 50. Note that the cross conveyor device 30 is disposed at a subsequent stage of the first machining device 20, and includes an oblique conveying unit that receives the intermediate sheet Sh1 discharged from the first machining device 20 on the endless belt 31 (single belt having a predetermined width), and conveys the intermediate sheet Sh1 toward the downstream side in the conveyance direction while conveying the intermediate sheet Sh1 obliquely toward the guide wall 32 such that an end edge of the received intermediate sheet Sh1 is along the guide wall 32.

An insertion unit 40 that delivers the intermediate sheet Sh1 discharged from the cross conveyor device 30 to a sheet feed port of the second machining device 50 is disposed at a subsequent stage of the cross conveyor device 30. Note that the insertion unit 40 includes an oblique conveyance unit that conveys the received intermediate sheet Sh1 toward the downstream side in the conveyance direction while conveying the intermediate sheet Sh1 by air suction obliquely toward the guide wall 41 so that the end edge of the received intermediate sheet Sh1 is along the guide wall 41.

The second machining device 50 is a sheet cutting device that is conventionally and widely used in the market. The intermediate sheet Sh1 cut (primarily processed) in advance into a sheet size that can be received by the second machining device 50 by the first machining device 20 is delivered from the insertion unit 40 to the sheet feed port of the second machining device 50. Thereafter, a driving roller 51 of the second machining device 50 feeds the intermediate sheets Sh1 one by one in the sheet conveyance direction, i.e. in the second direction. The second machining device 50 cuts the fed intermediate sheets Sh1 while conveying the intermediate sheets Sh1 by the device body based on the content of the processing job sent from the device for generating processing job 70, and discharges the product P after the cutting from the device body. The second machining device 50 includes a guillotine type blade 50a that stops the intermediate sheet Sh1 conveyed in the second direction and cuts the intermediate sheet Sh1 in the first direction, and a rotary blade 50b that cuts the intermediate sheet Sh1 in the second direction while conveying the intermediate sheet Sh1 in the second direction.. The sheet Sh needs to be cut by the rotary blade 20aa of the first machining device 20 so as to be equal to or smaller than the maximum size of the intermediate sheet Sh that can be processed by the second machining device 50. At the time of cutting, the rotary blade 20aa of the first machining device 20 stops the conveyance of the sheet Sh and then moves the rotary blade 20aa in the second direction to cut the sheet Sh, so that processing by the rotary blade 20aa takes time. On the other hand, the position of the rotary blade 50b of the second machining device 50 can be adjusted in the first direction, and the rotary blade 50b can cut the intermediate sheet Sh1 while conveying the intermediate sheet Sh1 in the second direction, so that the processing time can be shortened. Therefore, the processing time can be shortened when the cutting of the sheet Sh in the second direction is performed in the second machining device 50 rather than in the first machining device 20.

The second machining device 50 performs, for example, perforation processing, vertical folding die processing, horizontal folding die processing, rounding processing, embossing processing, die cutting processing, vertical folding processing, horizontal folding processing, simulated adhesion, adhesion, binding processing, or the like on the intermediate sheet Sh1 in addition to processing into the product P by vertical cutting and horizontal cutting processing. The product P is a product obtained as a result of processing the sheet Sh by the sheet processing system 1, and includes, for example, a ticket with a banknote and a flier with a banknote.

The conveyor stacker device 60 may be coupled to the discharge side of the second machining device 50. The conveyor stacker device 60 is a device that conveys the product P after the cutting process discharged from the second machining device 50 slowly by a belt conveyor, and stacks the unit cards in a state of being obliquely erected on a stacker 61 provided at an end portion thereof.

### [Device for Generating Processing Job]

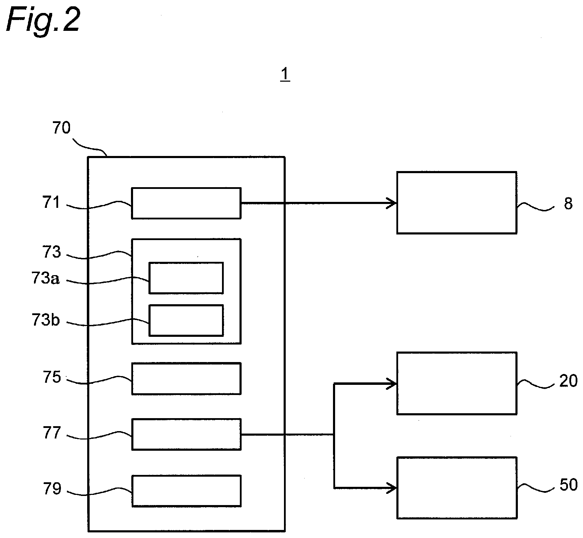

Next, the device for generating processing job 70 will be described in more detail with reference to Fig. 2. The device for generating processing job 70 includes a layout information creation unit 71, a processing position search unit 73, a determination unit 75, a processing job generation unit 77, and a storage unit 79.

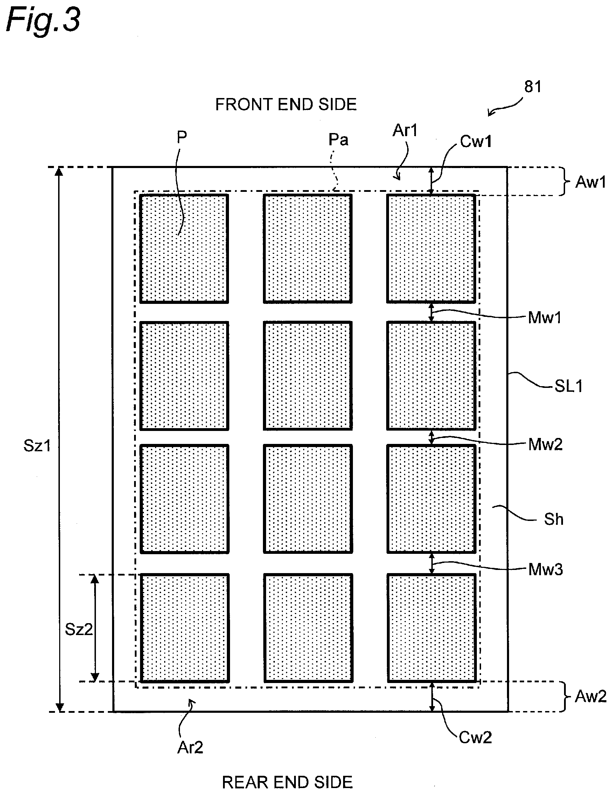

The layout information creation unit 71 creates the first layout information 81 in which the product P is disposed on the sheet Sh according to a predetermined procedure based on the size in the longitudinal direction and the size in the lateral direction of the product P and the size of the sheet Sh on which the product P is to be printed. The layout information creation unit 71 duplicates the product P, performs imposition by setting the position of the duplicated product P based on the size of the product P, and creates the first layout information 81. For example, as illustrated in Fig. 3, the products P are arranged in four rows and three columns in the sheet Sh. Note that, in the specification, the number of products P arranged on the sheet Sh in the first direction is referred to as the number of impositions. The imposition number is set based on the size Sz1 of the sheet Sh in the first direction and the size Sz2 of the product P in the first direction. For example, the number of impositions of the sheet Sh in Fig. 3 is four.

When imposing the product P, the layout information creation unit 71 sets the sheet front edge margin width Aw1 from the front end of the sheet Sh to the front end of the contour Pa of the product P to be equal to or larger than the minimum front end cut width Cw1 and equal to or smaller than the maximum size that can be discharged by the first machining device 20. The sheet front edge margin width Aw1 is a length of the margin region Ar1 on the front end side between the contour SL1 of the sheet Sh and the contour Pa of the product P in the first direction. The minimum front end cut width Cw1 is, for example, 15 mm. Here, the contour Pa of the product P is a contour of a region including a plurality of products P in a case where the plurality of products P are arranged on the sheet Sh. Note that the minimum front end cut width Cw1 refers to the minimum front end cut width of the sheet Sh that can be cut by the first machining device 20.

When imposing the product P, the layout information creation unit 71 sets the sheet rear edge margin width Aw2 from the rear end of the sheet Sh to the rear end of the contour Pa of the product P to be equal to or larger than the minimum rear end cut width Cw2 and equal to or smaller than the maximum size that can be discharged by the first machining device 20. The sheet rear edge margin width Aw2 is a length of the margin region Ar2 on the rear end side between the contour SL1 of the sheet Sh and the contour Pa of the product P in the first direction. Each of the margin region Ar1 and the margin region Ar2 corresponds to a first margin region. The minimum rear end cut width Cw2 is, for example, 10 mm. Furthermore, the layout information creation unit 71 sets the margin widths Mw1 to Mw3 between the respective products P arranged in the first direction. The number of margin widths is smaller by one than the imposition number. Note that the minimum rear end cut width Cw2 refers to the minimum rear end cut width of the sheet Sh that can be cut by the first machining device 20.

The layout information creation unit 71 also generates the second layout information 82 after the sheet Sh of the first layout information 81 is cut by the first machining device 20. The second layout information 82 is information regarding the position of the product P disposed on the intermediate sheet Sh1. In the second layout information 82, the size Sz3 of the intermediate sheet Sh1 in the first direction is set to a size within a range between the maximum size and the minimum size that can be conveyed by the cross conveyor device 30 and the second machining device 50, and is set to, for example, 190 to 370 mm.

In the second layout information 82, the layout information creation unit 71 sets the sheet front edge margin width Aw3 from the front end of the intermediate sheet Sh1 to the front end of the contour Pb of the product P and the sheet rear edge margin width Aw4 from the rear end of the intermediate sheet Sh1 to the rear end of the contour Pb of the product P within the range of the processable width Cw3. The sheet front edge margin width Aw3 is a length of the margin region Ar3 on the front end side in the first direction between the contour SL2 of the intermediate sheet Sh1 and the contour Pb of the product P. The sheet rear edge margin width Aw4 is a length of a margin region Ar4 on the rear end side in the first direction between the contour SL2 of the intermediate sheet Sh1 and the contour Pb of the product P. The margin region Ar3 and the margin region Ar4 each correspond to a second margin region. The processable width Cw3 is an allowable range of the margin lengths of the upstream end and the downstream end of the intermediate sheet Sh1 in the conveyance direction of the first machining device 20 after being cut by the first machining device 20 on the upstream side. In a case where the sheet front edge margin width Aw3 on the upstream side and the sheet rear edge margin width Aw4 on the downstream side of the intermediate sheet Sh1 in the first direction exceed the range of the processable width Cw3, the intermediate sheet Sh1 cannot be processed by the second machining device 50. The processable width Cw3 has a minimum value and a maximum value, and a range thereof is, for example, 4.2 to 55 mm. Here, the contour Pb of the product P is a contour of a region including a plurality of products P in a case where the plurality of products P are arranged on the intermediate sheet Sh1.

In the second layout information 82, the layout information creation unit 71 sets the margin width Dw3 in the first direction of the margin region Ar5 between the respective products P arranged in the first direction within the range of the processable width Mw5. The margin region Ar5 corresponds to a third margin region. The processable width Mw5 is an allowable range of the margin length between the products P that can be processed by the second machining device 50. The processable width Mw5 has a minimum value and a maximum value, and a range thereof is, for example, 5 to 15 mm. As described above, the margin length between the products P in the first direction may be different from the allowable range of the margin length at the upstream end and the downstream end of the intermediate sheet Sh1.

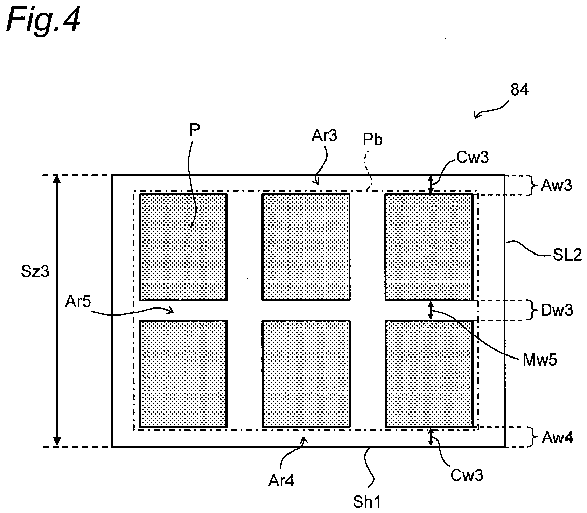

In the second layout information 82, the imposition number of the intermediate sheet Sh1 in the first direction is changed according to the performance of the second machining device 50. The number of impositions of the intermediate sheet Sh1 in the first direction is set to, for example, one to five. For example, the number of impositions of the intermediate sheet Sh1 in Fig. 4 is two in the first direction.

The layout information creation unit 71 creates the layout information again after searching for cutting position candidates of the processing position search unit 73.

The processing position search unit 73 includes a cutting position candidate search unit 73a that searches for a candidate for a cutting position to be cut by the first machining device 20, and a cutting position candidate selection unit 73b that selects an appropriate candidate from the searched cutting position candidates.

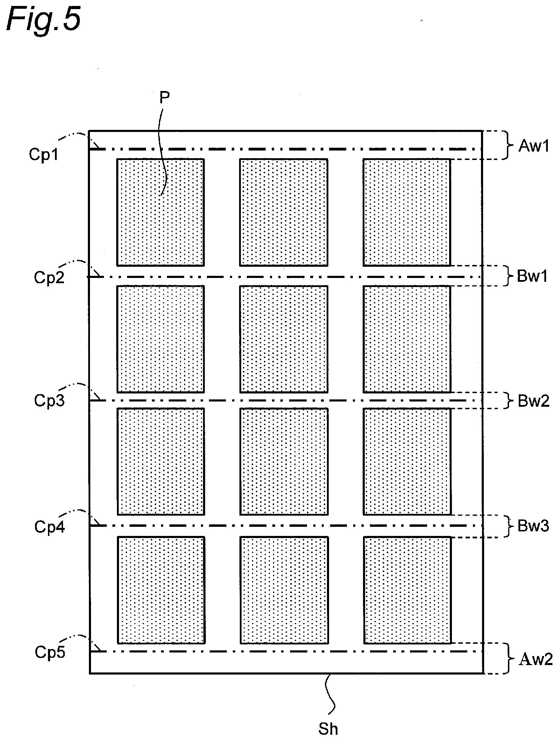

As illustrated in Fig. 5, the cutting position candidate search unit 73a searches for a candidate for a cutting position to be cut by the first machining device 20 on the basis of the first layout information 81 on the basis of the following conditions.
First condition: A candidate Cp1 for a cutting position is set in a sheet front edge margin satisfying "minimum value of processable width Cw3 + minimum front edge cut width Cw1 < sheet front edge margin width Aw1".
Second condition: Candidates Cp2, 3, and 4 of the cutting position are set in the margin between the products P satisfying "minimum value of processable width Cw3 × 2 < margin widths Bwl, Bw2, Bw3 between products P".
Third condition: A candidate Cp5 for the cutting position is set in the sheet rear end margin satisfying "minimum value of processable width Cw3 + minimum rear end cut width Cw2 < sheet rear edge margin width Aw2".

The cutting position candidate search unit 73a further generates combination candidates of cutting position candidates based on the sheet size in the first direction that can be conveyed by the second machining device 50.

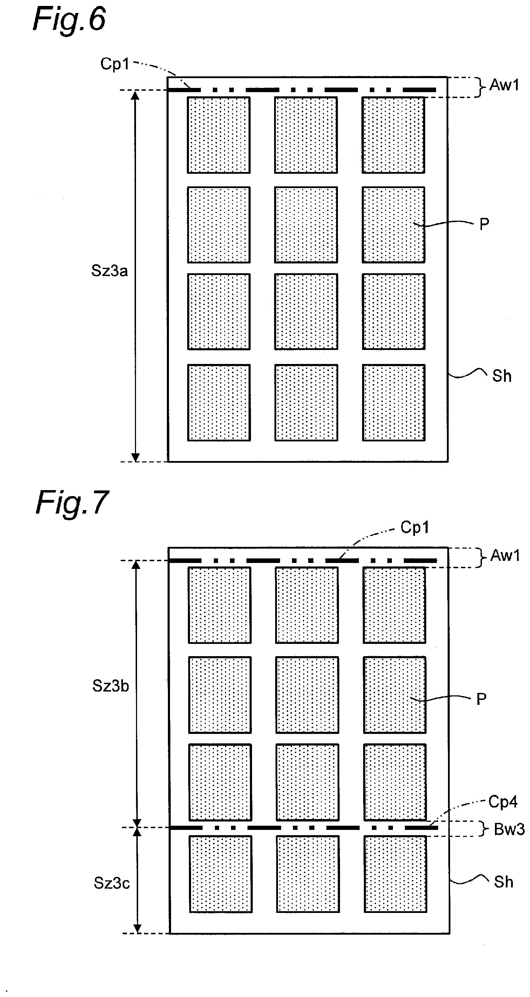

The cutting position candidate selection unit 73b erases an inappropriate candidate from the candidates searched by the cutting position candidate search unit 73a. For example, as illustrated in Fig. 6, in the sheet Sh, in a case where only the candidate Cp1 for the cutting position is searched as one candidate within the sheet front edge margin width Aw1, when the size Sz3a in the first direction from the rear end of the sheet to the candidate Cp1 for the cutting position exceeds the maximum width that can be inserted into the second machining device 50, the candidate is deleted.

Furthermore, as illustrated in Fig. 7, in the sheet Sh, in a case where a combination of "the candidate Cp1 for the cutting position within the sheet front edge margin width Aw1" and "the candidate Cp4 for the cutting position within the margin width Bw3 on the lower end side of the margin width between the products P" is searched as one of the candidates, in a case where the size Sz3c in the first direction from the sheet rear end to the candidate Cp4 for the cutting position is smaller than the minimum width that can be inserted into the second machining device 50, the combination candidate is deleted.

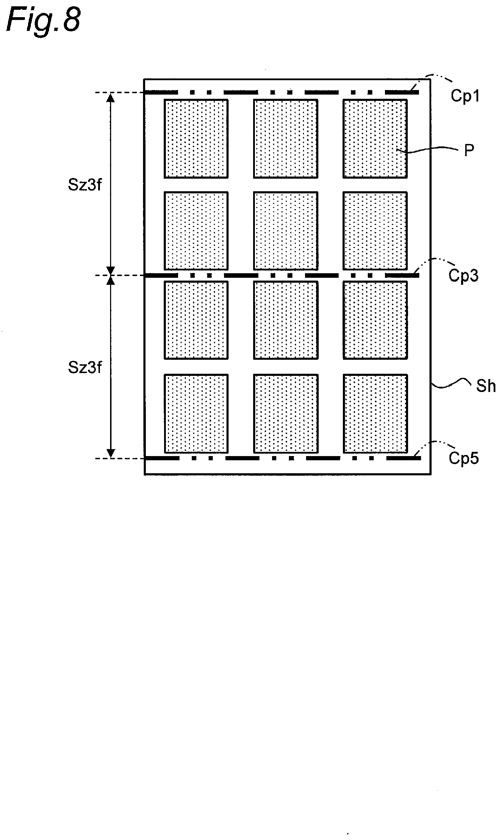

The cutting position candidate selection unit 73b further selects an appropriate cutting position from the combination candidates of the cutting positions on the basis of a predetermined candidate setting rule. For example, as illustrated in Fig. 8, a rule for setting the cutting position such that the second layout information 82 of the plurality of intermediate sheets Sh1 after cutting is all the same may be provided. In this case, the size between the cutting position candidates Cp1 and Cp3 and the size between the cutting position candidates Cp3 and Cp5 are both Sz3f and are the same. With such a cutting position, processing can be continuously performed by the second machining device 50 without switching the processing position of the second machining device 50, so that the processing speed can be increased. Furthermore, a rule for basically setting the cutting position within the sheet front edge margin width Aw1 may be provided. Accordingly, skew feeding of the sheet Sh or skew feeding of the print image printed on the sheet Sh can be corrected.

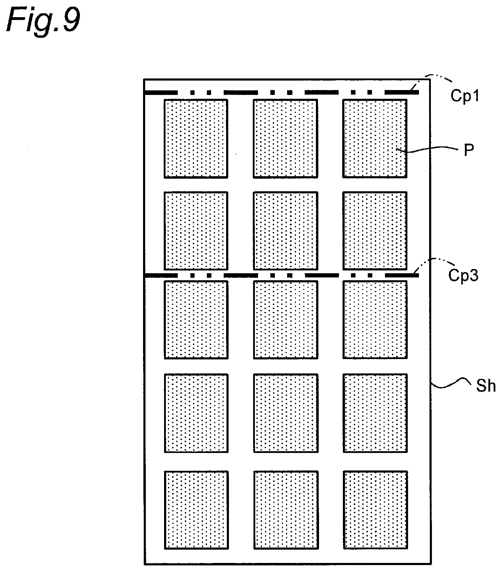

Furthermore, the number of imposition divisions may be set as a rule. In Fig. 8, since the four impositions is two impositions × 2, the number of imposition divisions is two. As illustrated in Fig. 9, the five impositions may be divided into two impositions and three impositions.

The determination unit 75 determines whether or not the first machining device 20 can cut with the cutting position candidates searched by the processing position search unit 73. Furthermore, it is determined whether or not the intermediate sheet Sh1 cut and divided at the cutting position can be conveyed by the second machining device 50. The determination unit 75 determines that the searched candidate can be processed in a case where both determination results are possible, and determines that the searched candidate cannot be processed in a case where at least one of both determination results is not possible.

The processing job generation unit 77 generates a processing job to be processed by the first machining device 20 and the second machining device 50 on the basis of the cutting position candidates determined to be processable by the determination unit 75.

The processing job includes information such as the size and type of the sheet, the size and arrangement of the product on the sheet, and the position, type, number, and dimension of processing performed on the sheet. That is, the information included in the processing job may be only the information of the processing position, a combination of the processing position and the processing type, a combination of the processing position and the arrangement of the product, or a combination of the processing position, the processing type, and the arrangement of the product.

The storage unit 79 includes a non-transitory storage medium that stores a program, data, or the like necessary for the device for generating processing job 70 to generate a processing job, and includes, for example, at least one of a ROM, an HDD, and an SSD. The storage unit 79 also includes a temporary storage medium such as a RAM. The information on the product to be printed on the sheet Sh is stored in, for example, the storage unit 79 or an external device (not illustrated). The external device is, for example, a personal computer, a smartphone, or a tablet PC, and is connected to the device for generating processing job 70 via a communication network.

The device for generating processing job 70 including the layout information creation unit 71, the processing position search unit 73, the determination unit 75, and the processing job generation unit 77 includes a processor of one or a plurality of integrated circuits, for example, a microcomputer, a CPU, an MPU, a GPU, a DSP, an FPGA, or an ASIC, and each function is implemented by the integrated circuit reading data and programs stored in the storage unit 79 and performing various arithmetic processing. The function of the device for generating processing job 70 may be configured only by hardware or may be realized by combining hardware and software.

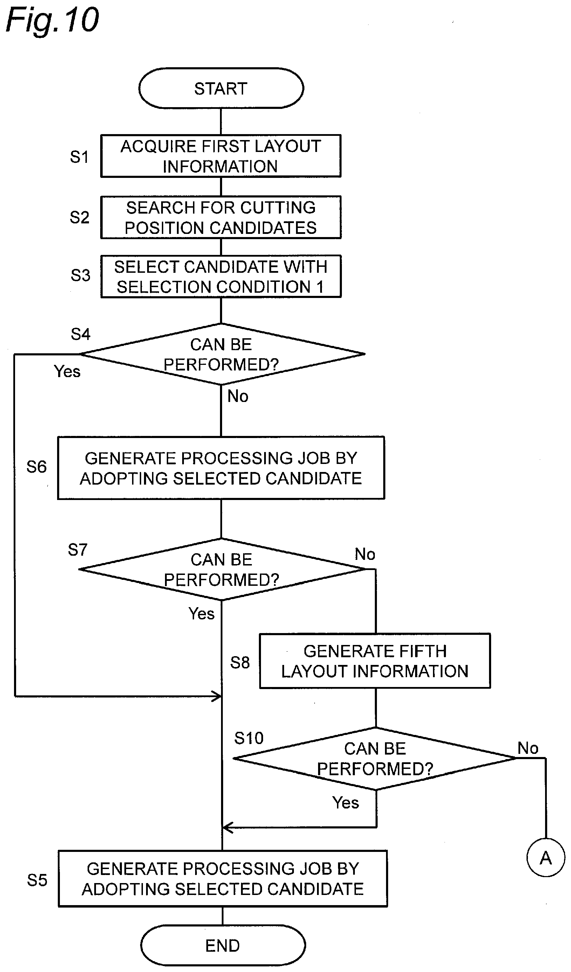

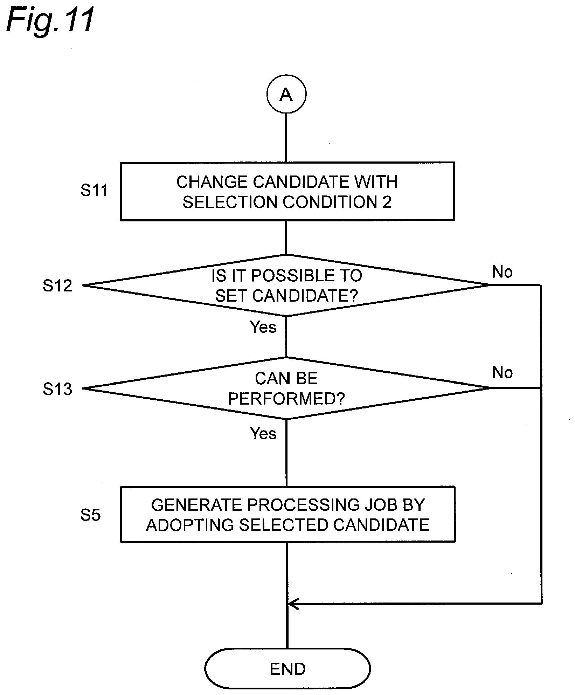

Next, a flow in which the device for generating processing job 70 reads a program stored in the storage unit 79 and generates a processing job will be described with reference to Figs. 10 and 11. Figs. 10 and 11 are flowcharts illustrating a flow of generating a processing job.

In step S1, in the device for generating processing job 70, when an instruction of processing job generation is input from the user, the layout information creation unit 71 generates and acquires the first layout information 81 according to a predetermined method on the basis of the size of the intermediate sheet Sh1 and the size of the product P. Note that the device for generating processing job 70 may acquire the first layout information 81 from the storage unit 79 or an external device (not illustrated) instead of generating the first layout information 81.

In step S2, as described above, the cutting position candidate search unit 73a of the processing position search unit 73 searches for cutting position candidates in the first layout information 81.

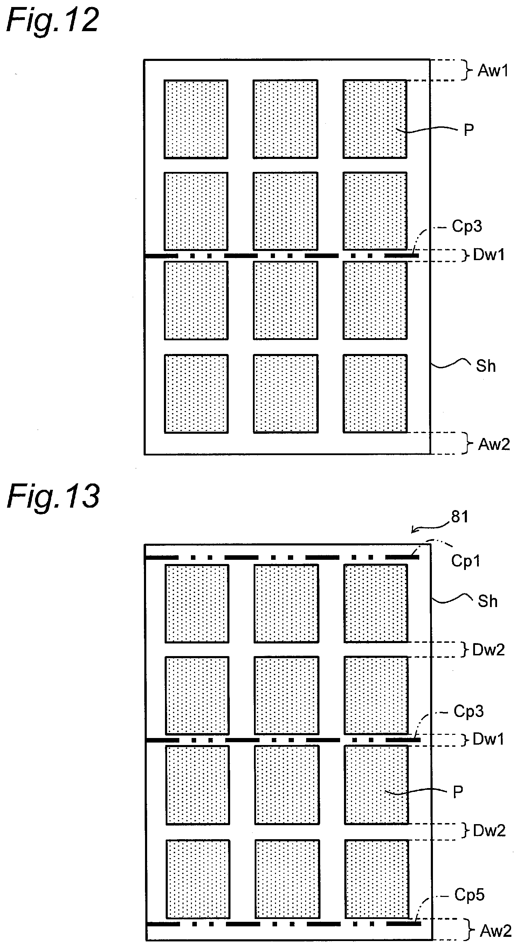

In step S3, as described above, the cutting position candidate selection unit 73b of the processing position search unit 73 selects an appropriate candidate from among the plurality of searched cutting position candidates. Note that selection of a candidate will be described in more detail with reference to Fig. 12.

The cutting position candidate selection unit 73b uses the sheet front edge margin width Aw1 and the margin width Dw1 between the products P in which the cutting position candidate Cp is set to select the cutting position candidate based on the selection condition 1 including the following fourth to sixth conditions.
Fourth condition: sheet front edge margin width Aw1 ≤ (margin width Dw1 between products P)/2
Fifth condition: The sheet skew feeding correction function in the first machining device 20 is set to OFF.

In a case where all of the fourth condition and the fifth condition are satisfied, a candidate in which the candidate Cp1 for the cutting position is not set in the sheet front edge margin width Aw1 is selected.

Sixth condition: sheet rear edge margin width Aw2 ≤ maximum value of processable width Cw3
In a case where the sixth condition is satisfied, a candidate in which the candidate Cp5 for the cutting position is not set in the sheet rear edge margin width Aw2 is selected.

Therefore, in a case where the selection condition 1 is satisfied, only the cutting position candidate Cp3 illustrated in Fig. 12 is selected from the combination candidates of the cutting position candidates Cp1, Cp3, and Cp5 illustrated in Fig. 8. Note that, in a case where only one of both the fourth condition and the fifth condition and the sixth condition is satisfied, a candidate suitable for each condition may be selected.

In step S4, the determination unit 75 determines whether or not processing with the cutting position candidate selected in step S3 can be performed. The determination unit 75 determines whether or not the processing content is within the range of the specification. For example, as illustrated in Fig. 4, the determination unit determines whether or not the size Sz3 in the first direction of the intermediate sheet Sh1 after the processing by the first machining device 20 is within the range of the maximum size and the minimum size that can be conveyed by the second machining device 50, whether or not the sheet front edge margin width Aw3 between the front end of the intermediate sheet Sh1 and the contour Pb of the product P is within the range of the processable width Cw3, and whether or not the sheet rear edge margin width Aw4 between the rear end of the intermediate sheet Sh1 and the contour Pb of the product P is within the range of the processable width Cw3, whether or not the margin width between the products P of the intermediate sheet Sh1 in the first direction is within the range of the processable width Mw5 is used as a determination criterion.

In Fig. 10, when the determination unit 75 determines that the processing with the selected candidates for the processing position in the first machining device 20 and the second machining device 50 is executable (Yes in step S4), the determination unit 75 selects a candidate having a small number of cutting positions from among the executable candidates. In step S5, the processing job generation unit 77 generates a processing job by adopting the selected cutting position candidate. In this manner, the first machining device 20 and the second machining device 50 can generate a processing job in which a candidate having a small number of cutting positions is selected and cutting processing is performed at the selected cutting position.

In a case where the determination unit 75 determines that the processing based on the selected processing position candidate cannot be performed (No in step S4) and in a case where the candidate cannot be selected under the selection condition 1 in step S3, the layout information creation unit 71 creates new third layout information in step S6.

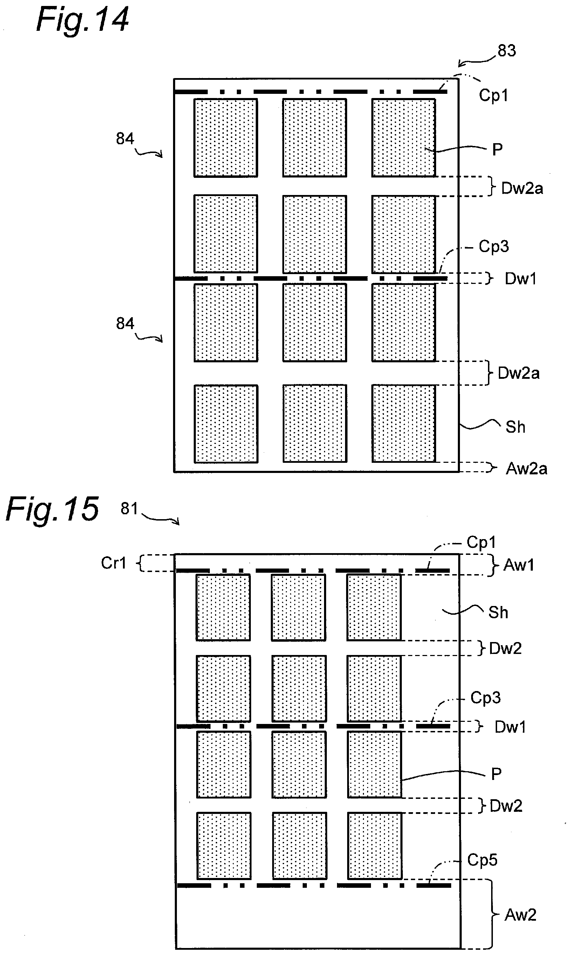

As illustrated in Fig. 13, the layout information creation unit 71 extracts, from the first layout information 81, candidates in which the candidate Cp1 for the cutting position is set to the sheet front edge margin width Aw1 and the candidate Cp5 for the cutting position is set to the sheet rear edge margin width Aw2. In the extracted candidate first layout information 81, a difference K1 between the sheet rear edge margin width Aw2 from the product P at the rear end in the first direction to the sheet rear end and the maximum value of the processable width Cw3 of the sheet rear edge margin width Aw4 of the intermediate sheet that can be processed by the second machining device is calculated. A value A1 obtained by dividing the calculated difference K1 by the number of margins between the products P in which the cutting position candidate Cp is not set is set as a margin width Dw2a (see Fig. 14) in addition to a margin width Dw2 between the products P in which the cutting position candidate Cp is not set. That is, Dw2 + A1 = Dw2a. In Fig. 13, the number of margins between the products P for which the candidates Cp for the cutting position are not set in the first direction is two. However, since the margin width Dw2 a needs to be within the range of the processable width Mw5, the margin width Dw2a is set to, for example, 15 mm or less. Then, the sheet rear edge margin width Aw2 is changed to a value Aw2a obtained by subtracting the calculated difference K1. Moreover, the candidate Cp5 for the cutting position set to the sheet rear edge margin width Aw2 is deleted. As described above, the layout information creation unit 71 rearranges the product P on the sheet Sh and newly generates the third layout information 83 (see Fig. 14).

In step S7, the determination unit 75 determines whether the new third layout information 83 and the fourth layout information 84 cut by the cutting position candidates Cp1 and Cp3 of the third layout information 83 are executable. The determination criterion is the same as that in step S4, but in a case where the sheet rear edge margin width Aw2a is larger than a predetermined threshold, it may be determined that the sheet rear edge margin width Aw2a is not executable. Here, the fourth layout information 84 is information regarding the position of the product P disposed on the intermediate sheet Sh1 generated by cutting the sheet Sh with the candidate Cp of the cutting position set in the third layout information 83. In the determination by the determination unit 75, the new third layout information 83 and the new fourth layout information 84 are selected on the basis of the maximum size and the minimum size of the intermediate sheet Sh1 in the first direction, which can be conveyed by the second machining device 50, and the size of the product P.

When the determination unit 75 determines that the processing based on the new third layout information 83 and the fourth layout information 84 can be performed (Yes in step S7), steps S2 and S3 are performed based on the newly created third layout information 83. That is, based on the newly created third layout information 83, the cutting position candidate search unit 73a of the processing position search unit 73 again searches the third layout information 83 for cutting position candidates, and the cutting position candidate selection unit 73b of the processing position search unit 73 selects an appropriate candidate from among the plurality of searched cutting position candidates. Thereafter, in step S5, the processing job generation unit 77 generates a processing job by adopting the newly created third layout information 83 and fourth layout information 84.

In a case where the determination unit 75 determines that the processing based on the new third layout information 83 and the fourth layout information 84 cannot be performed (No in step S7) and in a case where the third layout information 83 cannot be created in step S6, the layout information creation unit 71 creates the new fifth layout information 85 in step S8.

For example, as illustrated in Fig. 15, in a case where the ratio of the size of the product P to the sheet Sh is smaller than that of the first layout information 81 as illustrated in Fig. 13, the sheet rear edge margin width Aw2 may be a large region.

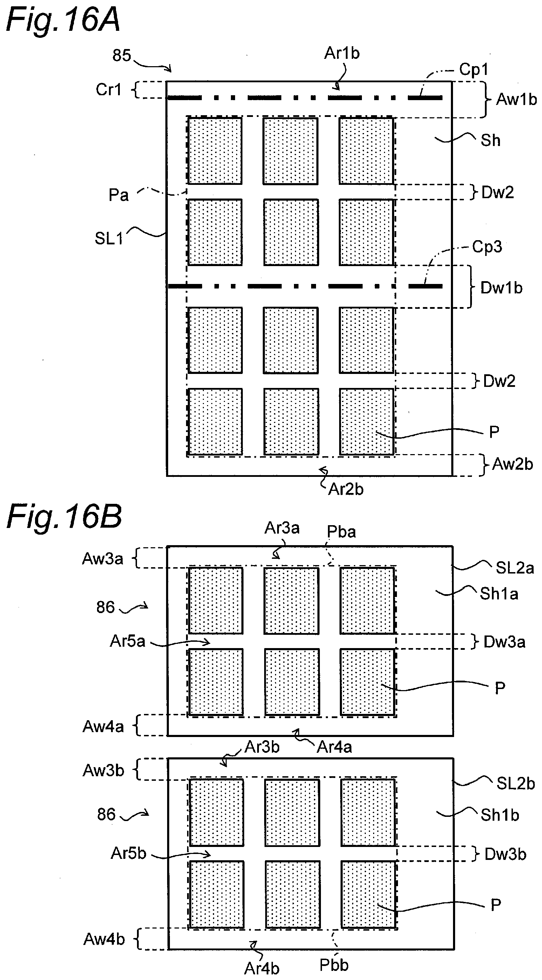

In such a case, in step S8, the layout information creation unit 71 creates new fifth layout information 85 as illustrated in Fig. 16A. The layout information creation unit 71 already extracts a candidate imposed based on the size of the product P in the first layout information 81 as illustrated in Fig. 15, in which the candidate Cp1 for the cutting position is set in the sheet front edge margin width Aw1 and the candidate Cp5 for the cutting position is set in the sheet rear edge margin width Aw2. Note that, in the extracted candidate first layout information 81, the margin width Dw2 between the products P in which the candidate Cp for the cutting position is not set is set in advance to the maximum width that can be processed by the second machining device 50.

The layout information creation unit 71 sets the distance Cr1 from the front end of the sheet Sh to the candidate Cp1 for the cutting position at the position closest to the front end of the sheet Sh to a width that can be processed by the first machining device 20, but sets the distance Cr1 to the minimum front end cut width Cw1 in this example. As the margin width Dw1b between the products P in which the candidate Cp3 for the cutting position is set, for example, a value obtained by dividing the sum of the sheet rear edge margin width Aw2 in the first layout information 81 of Fig. 15, the margin width Dw1 between the products P in which the candidate Cp3 for the cutting position is set, and the difference K2 between the sheet front edge margin width Aw1 and the distance Cr1 by the number N of the intermediate sheets Sh1 is set. That is, it is calculated by the following equation. $Dw 1 b = \left(Aw2+Dw1+\left(Aw1-Cr1\right)\right) / N$

Note that, in the example of Fig. 16A, since two intermediate sheets Sh1 are generated from the sheet Sh, N = 2.

The sheet front edge margin width Aw1b in the fifth layout information 85 is calculated by, for example, the sum of the distance Cr1 and the half value of the margin width Dw1b between the products P. That is, it is set by the following equation. $Aw 1 b = Cr 1 + \left(Dw1b/2\right)$

The sheet rear edge margin width Aw2b in the fifth layout information 85 is calculated by subtracting a difference K3 between the sheet front edge margin width Aw1b and the sheet front edge margin width Aw1 in Fig. 15 and a difference K4 between the margin width Dw1b between the products P and the margin width Dw1 between the products P in Fig. 15 from the sheet rear edge margin width Aw2 in Fig. 15. That is, it is set by the following equation. $Aw 2 b = Aw 2 - \left(Aw1b-Aw1\right) - \left(Dw1b-Dw1\right)$

In the fifth layout information 85 illustrated in Fig. 16A, the position of the candidate Cp3 for the cutting position at the center of the sheet Sh and the position of the product P with respect to the sheet Sh are also changed as compared with the first layout information 81 before the change illustrated in Fig. 15. When the fifth layout information is newly created in this manner and the first machining device 20 cuts the sheet Sh with the candidates Cp1 and Cp3 of the set cutting position based on the created fifth layout information, two intermediate sheets Sh1a and Sh1b are generated as illustrated in Fig. 16B. The layout information creation unit 71 sets the size of each of the two intermediate sheets Sh1a and Sh1b in the first direction within the range of the maximum size and the minimum size that can be conveyed by the second machining device 50. Furthermore, the layout information creating unit 71 sets the sizes of the margin regions Ar3a, Ar4a, Ar3b, and Ar4b in the first direction between the contours SL2a and SL2b of the intermediate sheets Sh1a and Sh1b and the contours Pba and Pbb of the product P within the range of the maximum size and the minimum size that can be processed by the second machining device 50.

The layout information creation unit 71 sets the margin widths Dw3a and Dw3b in the first direction of the margin regions Ar5a and Ar5b between the respective products P arranged in the first direction on the respective intermediate sheets Sh1a and Sh1b within the range of the processable width Mw5 within the range of the maximum size and the minimum size that can be processed by the second machining device 50. The sheet front edge margin width Aw3a of the intermediate sheet Sh1a and the sheet front edge margin width Aw3b of the intermediate sheet Sh1b have the same length, and the sheet rear edge margin width Aw4a of the intermediate sheet Sh1a and the sheet rear edge margin width Aw4b of the intermediate sheet Sh1b have the same length. Furthermore, the margin width Dw3a between the products P of the intermediate sheet Sh1a and the margin width Dw3b between the products P of the intermediate sheet Sh1b are both equal to the margin width Dw2 between the products P of the sheet Sh in Fig. 16A. Therefore, since the layout arrangement of the products P is the same between the intermediate sheet Sh1a and the intermediate sheet Sh1b, the intermediate sheet Sh1a and the intermediate sheet Sh1b can be continuously processed without adjusting the rotary blade 50b in the first direction in the second machining device 50.

Note that steps S2 and S3 may be performed based on the newly created fifth layout information 85. That is, based on the newly created fifth layout information 85, in the processing position search unit 73, the cutting position candidate search unit 73a again searches the first layout information 81 for cutting position candidates, and the cutting position candidate selection unit 73b of the processing position search unit 73 selects an appropriate candidate from among the plurality of searched cutting position candidates.

In step S10, similarly to step S4, the determination unit 75 determines whether the new fifth layout information 85 and the sixth layout information 86 cut by the cutting position candidates Cp1 and Cp3 of the fifth layout information 85 are executable. Here, the sixth layout information 86 is information regarding the position of the product P disposed on the intermediate sheets Sh1a and Sh1b generated by cutting the sheet Sh with the cutting position candidates Cp1 and Cp3 set in the fifth layout information 85.

When the determination unit 75 determines that the processing based on the new fifth layout information 85 and the new sixth layout information 86 can be performed (Yes in step S10), in step S5, the processing job generation unit 77 generates a processing job by adopting the newly created fifth layout information 85 and sixth layout information 86.

In a case where the determination unit 75 determines that the processing based on the new fifth layout information 85 and the sixth layout information 86 cannot be performed (No in step S10) and in a case where the fifth layout information 85 cannot be created in step S8, the process proceeds to step S11.

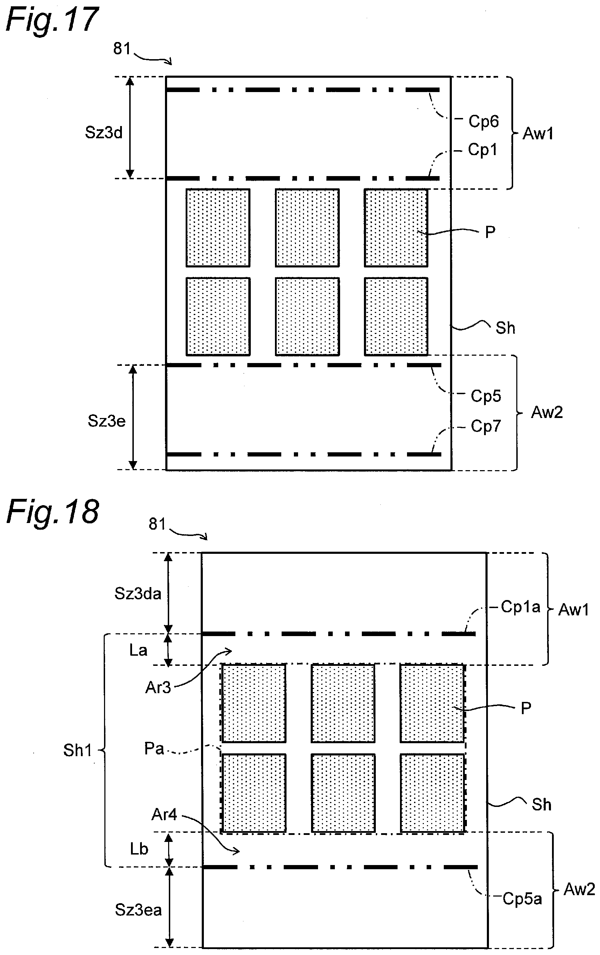

In step S11, as illustrated in Fig. 17, in a case where the following selection condition 2 is satisfied, the cutting position candidate selection unit 73b adjusts the position of the cutting position candidate Cp.

Seventh condition: In a case where there are two candidates for the cutting position (Cp1, Cp6) within the sheet front edge margin width Aw1, the position of the candidate Cp1 for the cutting position closer to the product P is changed to the front end side. In this case, the size from the position of the candidate Cp1 for the cutting position in the first direction to the front end of the sheet Sh is Sz3d. In a case where the position of the candidate Cp1 after the change is the candidate Cp1a, the size from the position of the candidate Cp1a of the cutting position in the first direction to the front end of the sheet Sh is Sz3da. This size Sz3da is less than the maximum discharge size that can be discharged by the first machining device 20. The maximum discharge size is, for example, 190 mm.

Eighth condition: In a case where there are two candidates for the cutting position within the sheet rear edge margin width Aw2 (Cp5, Cp7), the position of the candidate Cp5 for the cutting position closer to the product P is changed to the rear end side. In this case, the size from the position of the candidate Cp5 for the cutting position in the first direction to the rear end of the sheet Sh is Sz3e. In a case where the position of the candidate Cp5 after the change is the candidate Cp5a, the size from the position of the candidate Cp5a of the cutting position in the first direction to the rear end of the sheet Sh is Sz3ea. This size Sz3ea is less than the maximum discharge size that can be discharged by the first machining device 20. At this time, the distance La between the candidate Cp1a for the cutting position and the contour Pa of the product P (corresponding to the length of the margin region Ar3 of the intermediate sheet Sh1) and the distance Lb between the candidate Cp5a for the cutting position and the contour Pa of the product P (corresponding to the length of the margin region Ar4 of the intermediate sheet Sh1) must be within the range of the processable width Cw3, and is, for example, 4.2 to 55 mm. Furthermore, the size from the candidate Cp1a to the candidate Cp5a of the cutting position in the first direction is set within the range of the maximum size and the minimum size in the first direction of the intermediate sheet Sh1 that can be conveyed by the second machining device 50.

In a case where the seventh condition is satisfied, as illustrated in Fig. 18, the candidate Cp1a for the cutting position is newly set on the front end side of the candidate Cp1, and the candidate Cp6 for the cutting position is deleted. Furthermore, in a case where the eighth condition is satisfied, the candidate Cp5a for the cutting position is newly set on the lower end side of the candidate Cp5, and the candidate Cp7 for the cutting position is deleted. As described above, in a case where the candidates Cp1a and Cp5a for the cutting position can be set (Yes in step S12), the process proceeds to step S13.

In step S13, the determination unit 75 determines whether or not the second layout information cut by the new cutting position candidates Cp1a and Cp5a and the cutting position candidates Cp1a and Cp5a in the first layout information 81 can be implemented by the first machining device 20 and the second machining device 50, respectively.

When the determination unit 75 determines that the processing with the new cutting position candidate can be performed (Yes in step S13), in step S5, the processing job generation unit 77 generates a processing job by adopting the newly set cutting position candidates Cp1a and Cp5a. In a case where there are a plurality of types of possible new cutting position candidates, the determination unit 75 selects a candidate having a small number of cutting positions.

In a case where the determination unit 75 determines that the process using the new cutting position candidates cannot be performed (No in step S13) or in a case where the cutting position candidates Cp1a and Cp5a cannot be set in step S11 (No in step S12), a candidate having the smallest number of cutting position candidates is selected from the candidates searched in step S2, and a processing job is generated and terminated.

As described above, the sheet processing system 1 according to the embodiment includes the first machining device 20, the second machining device 50, and the device for generating processing job 70. The first machining device 20 conveys the sheet Sh on which at least one product P is disposed in a first direction that is a conveyance direction of the first machining device, cuts the sheet Sh at at least one cutting position according to the processing job in a state where the sheet Sh is stopped, and discharges the intermediate sheet Sh1. The second machining device 50 processes the intermediate sheet Sh1 discharged from the first machining device 20 according to the processing job, and discharges the product P. The device for generating processing job 70 instructs processing contents to be performed by each of the first machining device 20 and the second machining device 50. The device for generating processing job 70 searches for at least one cutting position candidate Cp on the basis of the first layout information 81 that is information regarding the position of the product P disposed on the sheet Sh, selects, from among the candidates Cp for the cutting position, a candidate having a small number of cutting positions that can be processed by the first machining device 20 and the second machining device 50 on the basis of the maximum sizes of the sheet front edge margin width Aw1 and the sheet rear edge margin width Aw2 of the margin regions Ar1 and Ar2 between the contour SL1 of the sheet Sh and the contour Pa of the product P in the first direction, which can be discharged by the first machining device 20, and the maximum size and the minimum size of the intermediate sheet Sh1 in the first direction, which can be conveyed by the second machining device 50, and generates a processing job for performing processing at the selected cutting position.

Furthermore, the processing job generation program according to the embodiment causes, for example, the processing job generation unit 77 including an integrated circuit to generate, in the sheet processing system 1, a processing job that gives an instruction on processing contents to be performed by each of the first machining device 20 and the second machining device 50. According to the processing job generation program, for example, the processing job generation unit 77 including an integrated circuit acquires the first layout information 81 that is information regarding a position of the product P disposed on the sheet Sh, searches for at least one candidate Cp for a cutting position on the basis of the first layout information 81, selects, from among the candidates Cp for the cutting position, a candidate having a small number of cutting positions that can be processed by the first machining device 20 and the second machining device 50 on the basis of the maximum sizes of the sheet front edge margin width Aw1 and the sheet rear edge margin width Aw2 of the margin regions Ar1 and Ar2 between the contour SL1 of the sheet Sh and the contour Pa of the product P in the first direction, which can be discharged by the first machining device 20, and the maximum size and the minimum size of the intermediate sheet Sh1 in the first direction, which can be conveyed by the second machining device 50, and generates a processing job for performing processing at the selected cutting position.

By reducing the number of times of cutting by stopping the sheet Sh in the first machining device 20, the time required for processing of the entire sheet processing system 1 can be shortened, and wear of the rotary blade 20aa of the first machining device 20 that cuts the sheet Sh can be suppressed.

In a case where the sheet Sh is divided into the plurality of intermediate sheets Sh1a and Sh1b in the first machining device 20, the device for generating processing job 70 creates new fifth layout information 85 on the basis of the given first layout information 81 that is information regarding the position of the product P disposed on the sheet Sh, the maximum size and the minimum size of the intermediate sheets Sh1a and Sh1b in the first direction that can be conveyed by the second machining device 50, the maximum size and the minimum size of the margin regions Ar3a, Ar4a, Ar3b, and Ar4b in the first direction between the contours SL2a and SL2b of the intermediate sheets Sh1a and Sh1b that can be processed by the second machining device 50 and the contours Pba and Pbb of the product P, and the size of the product P. The device for generating processing job 70 searches for at least one candidate Cp for the cutting position on the basis of the new fifth layout information 85 instead of the first layout information 81, selects, from among the candidates Cp for the cutting position, a candidate having a small number of cutting positions that can be processed by the first machining device 20 and the second machining device 50 on the basis of the maximum sizes of the sheet front edge margin width Aw1b and the sheet rear edge margin width Aw2b of the margin regions Ar1b and Ar2b between the contour SL1 of the sheet Sh and the contour Pa of the product P in the first direction, which can be discharged by the first machining device 20, and the maximum size and the minimum size of the intermediate sheet Sh1 in the first direction, which can be conveyed by the second machining device 50, and generates a processing job for performing processing at the selected cutting position.

The device for generating processing job 70 creates new sixth layout information 85 such that a layout of each of products P on the plurality of intermediate sheets Sh1a and Sh1b becomes the same among the plurality of intermediate sheets Sh1a and Sh1b.

On the basis of, in addition to the maximum size in the first direction that can be discharged by the first machining device 20 and the maximum size and the minimum size in the first direction of the intermediate sheet Sh1 that can be conveyed by the second machining device 50, the maximum size and the minimum size in the first direction of the margin regions Ar3 and Ar4 between the contour SL2 of the intermediate sheet Sh1 that can be processed by the second machining device 50 and the contour Pb of the product P, the device for generating processing job 70 corrects candidates for the cutting position Cp and selects a candidate that can be processed by the first machining device 20 and the second machining device 50 and has a small number of cutting positions from among the candidates for the cutting position Cp.

In a case where the sheet Sh is divided into the plurality of intermediate sheets Sh1a and Sh1b in the first machining device 20, the device for generating processing job 70 creates new fifth layout information 85 on the basis of the given first layout information 81 that is information regarding the position of the product P disposed on the sheet Sh, the maximum size and the minimum size of the intermediate sheets Sh1a and Sh1b in the first direction that can be conveyed by the second machining device 50, the maximum size and the minimum size of the margin regions Ar3a, Ar4a, Ar3b, and Ar4b in the first direction of the intermediate sheets Sh1a and Sh1b that can be processed by the second machining device 50, the maximum size and the minimum size in the first direction of the margin regions Ar5a, Ar5b between the products P disposed on one of the intermediate sheets Sh1a and Sh1b that can be processed by the second machining device 50 and disposed at adjacent positions, and the size of the products P. The device for generating processing job 70 searches for at least one candidate Cp for the cutting position on the basis of new fifth layout information 85 instead of the first layout information 81, selects, from among the candidates Cp for the cutting position, a candidate having a small number of cutting positions that can be processed by the first machining device 20 and the second machining device 50 on the basis of the maximum sizes of the sheet front edge margin width Aw1b and the sheet rear edge margin width Aw2b of the margin regions Ar1b and Ar2b between the contour SL1 of the sheet Sh and the contour Pa of the product P in the first direction, which can be discharged by the first machining device 20, and the maximum size and the minimum size of the intermediate sheet Sh1 in the first direction, which can be conveyed by the second machining device 50, and generates a processing job for performing processing at the selected cutting position.

The device for generating processing job 70 generates a processing job in which a cutting position is set between the front end of the sheet Sh and the product P on the most front end side in the first direction. The device for generating processing job 70 can correct skew feeding of the sheet Sh or skew feeding of a print image printed on the sheet Sh by setting the cutting position within the sheet front edge margin width Aw1.

Although the present disclosure has been fully described in connection with preferred embodiments with reference to the accompanying drawings, various changes and modifications will be apparent to those skilled in the art.

In the above-described embodiment, for example, in a case where the sheet Sh is cut by one cutting line as illustrated in Fig. 12, the layout information creation unit 71 may create new layout information by changing the arrangement of the product P such that the arrangement of the product P is line-symmetric with respect to the candidate Cp3 for the cutting position as illustrated in Fig. 16B. Furthermore, the first machining device 20 is not limited to stopping the sheet Sh when the cutting mechanism 20a cuts the sheet Sh. In the first machining device 20, the cutting mechanism 20a may cut the sheet Sh while the driving roller 23 conveys the sheet Sh. In this case, the cutting mechanism 20a may use a rotary cutter.

The device for generating processing job, the sheet processing system, and the processing job generation program according to the present disclosure are applicable to a device that cuts a sheet to obtain a product.

## Claims

1. A device for generating processing job (70) in a sheet processing system (1), the sheet processing system (1) including a first machining device (20) that conveys a sheet (Sh) on which at least one product is disposed in a first direction that is a conveyance direction of the first machining device (20), cuts the sheet (Sh) at at least one cutting position according to a processing job, and discharges an intermediate sheet (Sh1); and a second machining device (50) that processes the intermediate sheet (Sh1) discharged from the first machining device (20) according to the processing job, and discharges the product, the device for generating processing job (70) generating the processing job that gives an instruction on processing contents to be performed by each of the first machining device (20) and the second machining device (50),
the second machining device (50) including a rotary blade (50b) that cuts the intermediate sheet (Sh1) in the same direction as a cutting direction at the cutting position while conveying the intermediate sheet (Sh1) in a second direction,
the device for generating processing job (70) searches for at least one candidate for the cutting position based on layout information that is information regarding a position of the product disposed on the sheet (Sh),
from among the at least one candidate for the cutting position, selects a candidate that can be processed by the first machining device (20) and the second machining device (50) and has a small number of cutting positions based on a maximum size of a first margin region between a contour of the sheet (Sh) and a contour of the product in the first direction, the first margin region being dischargeable by the first machining device (20), and a maximum size and a minimum size of the intermediate sheet (Sh1) in the first direction, the intermediate sheet (Sh1) being conveyable by the second machining device (50), and
generates the processing job for performing processing at the selected cutting position, and
the device for generating processing job (70), in a case where the sheet (Sh) is able to be cut by either the first machining device (20) or the rotary blade (50b), from among the at least one candidate for the cutting position, selects a candidate that requires a lower number of times of cutting by the first machining device (20), and generates the processing job for performing processing at the selected cutting position.

2. The device for generating processing job (70) according to claim 1, wherein in a case where the sheet (Sh) is divided into a plurality of the intermediate sheets (Sh1) in the first machining device (20),
based on layout information that is given and is information regarding a position of the product disposed on the sheet (Sh),
a maximum size and a minimum size of the intermediate sheets (Sh1) in the first direction, the intermediate sheets (Sh1) being conveyable by the second machining device (50),
a maximum size and a minimum size in the first direction of a second margin region between a contour of the intermediate sheets (Sh1) that can be processed by the second machining device (50) and a contour of the product, and
a size of the product,
the device for generating processing job (70) creates new layout information, searches for at least one candidate for the cutting position based on the new layout information, and generates the processing job.

3. The device for generating processing job (70) according to claim 2, wherein the device for generating processing job (70) generates the new layout information such that a layout of each of products on the plurality of intermediate sheets (Sh1) becomes a same among the plurality of intermediate sheets (Sh1).

4. The device for generating processing job (70) according to claim 1, wherein the device for generating processing job (70)
corrects candidates for the cutting position based on a maximum size in the first direction that can be discharged by the first machining device (20),
a maximum size and a minimum size in the first direction of the intermediate sheet (Sh1) that can be conveyed by the second machining device (50), and
a maximum size and a minimum size in the first direction of a second margin region between a contour of the intermediate sheet (Sh1) that can be processed by the second machining device (50) and a contour of the product, and
selects a candidate having a small number of cutting positions that can be processed by the first machining device (20) and the second machining device (50) from among the candidates for the cutting position.

5. The device for generating processing job (70) according to claim 1, wherein
in a case where the sheet (Sh) is divided into a plurality of the intermediate sheets (Sh1) in the first machining device (20),
based on layout information that is given and is information regarding a position of the product disposed on the sheet (Sh),
a maximum size and a minimum size of the intermediate sheets (Sh1) in the first direction, the intermediate sheets (Sh1) being conveyable by the second machining device (50),
a maximum size and a minimum size in the first direction of the second margin region of the intermediate sheets (Sh1) that can be processed by the second machining device (50),
a maximum size and a minimum size in the first direction of a third margin region between products disposed on the one intermediate sheet (Sh1) that can be processed by the second machining device (50) and disposed at adjacent positions, and
a size of the products,
the device for generating processing job (70) creates new layout information, searches for at least one candidate for the cutting position based on the new layout information, and generates the processing job.

6. The device for generating processing job (70) according to claim 1, wherein the device for generating processing job (70) generates a processing job in which a cutting position is set between a front end of the sheet (Sh) and a product on a most front end side in the first direction.

7. A sheet processing system (1) comprising:
a first machining device (20) that processes a sheet (Sh) on which at least one product is disposed according to a processing job, and discharges an intermediate sheet (Sh1);
a second machining device (50) that processes the intermediate sheet (Sh1) discharged from the first machining device (20) according to the processing job, and discharges a product; and
the device for generating processing job according to claim 1, wherein
the first machining device (20) includes:
a first conveyance unit that conveys the sheet (Sh) in a first direction; and
a cutter that cuts the sheet (Sh) conveyed in the first direction at at least one cutting position set as the processing job in a second direction orthogonal to the first direction to divide the sheet (Sh) into a plurality of the intermediate sheets (Sh1), or divide the sheet (Sh) into a margin not including the product and the intermediate sheet (Sh1) including the product,
the second machining device (50) includes:
a second conveyance unit that conveys the intermediate sheet (Sh1) discharged from the first machining device (20) in the second direction; and
a machining apparatus that processes the intermediate sheet (Sh1) conveyed by the second conveyance unit.

8. The sheet processing system (1) according to claim 7, wherein
in a case where the sheet (Sh) is divided into a plurality of the intermediate sheets (Sh1) in the first machining device (20),
based on layout information that is given and is information regarding a position of the product disposed on the sheet (Sh),
a maximum size and a minimum size of the intermediate sheets (Sh1) in the first direction, the intermediate sheets (Sh1) being conveyable by the second machining device (50),
a maximum size and a minimum size in the first direction of a second margin region between a contour of the intermediate sheets (Sh1) that can be processed by the second machining device (50) and a contour of the product, and
a size of the product,
the device for generating processing job (70) creates new layout information, searches for at least one candidate for the cutting position based on the new layout information, and generates the processing job.

9. The sheet processing system (1) according to claim 8, wherein the device for generating processing job (70) generates the new layout information such that a layout of each of products on the plurality of intermediate sheets (Sh1) becomes a same among the plurality of intermediate sheets (Sh1).

10. The sheet processing system (1) according to claim 7, wherein
the device for generating processing job (70)
corrects candidates for the cutting position based on a maximum size in the first direction that can be discharged by the first machining device (20),
a maximum size and a minimum size in the first direction of the intermediate sheet (Sh1) that can be conveyed by the second machining device (50), and
a maximum size and a minimum size in the first direction of a second margin region between a contour of the intermediate sheet (Sh1) that can be processed by the second machining device (50) and a contour of the product, and
selects a candidate having a small number of cutting positions that can be processed by the first machining device (20) and the second machining device (50) from among the candidates for the cutting position.

11. The sheet processing system (1) according to claim 7, wherein
in a case where the sheet (Sh) is divided into a plurality of the intermediate sheets (Sh1) in the first machining device (20),
based on layout information that is given and is information regarding a position of the product disposed on the sheet (Sh),
a maximum size and a minimum size of the intermediate sheets (Sh1) that are conveyable by the second machining device (50),
a maximum size and a minimum size in the first direction of the second margin region of the intermediate sheets (Sh1) that can be processed by the second machining device (50),
a maximum size and a minimum size in the first direction of a third margin region between products disposed on the one intermediate sheet (Sh1) that can be processed by the second machining device (50) and disposed at adjacent positions, and
a size of the products,
the device for generating processing job (70) creates new layout information, searches for at least one candidate for the cutting position based on the new layout information, and generates the processing job.

12. The sheet processing system (1) according to claim 7, wherein the device for generating processing job generates a processing job in which a cutting position is set between a front end of the sheet (Sh) and a product on a most front end side in the first direction.

13. The sheet processing system (1) according to claim 7, wherein
the cutter includes a first rotary blade that moves in the second direction, and
the machining apparatus includes a guillotine type blade that cuts the intermediate sheet (Sh1) conveyed in the second direction in the first direction, and a second rotary blade that cuts the intermediate sheet (Sh1) in the second direction and is positionally adjustable in the first direction.

14. A processing job generation program comprising instructions which, when the program is executed by an integrated circuit, cause the integrated circuit to generate, in a sheet processing system (1) including: a first machining device (20) that conveys a sheet (Sh) on which at least one product is disposed in a first direction that is a conveyance direction of the first machining device (20), cuts the sheet (Sh) at at least one cutting position according to a processing job, and discharges an intermediate sheet (Sh1); and a second machining device (50) that processes the intermediate sheet (Sh1) discharged from the first machining device (20) according to the processing job, and discharges a product, the processing job that gives an instruction on processing contents to be performed by each of the first machining device (20) and the second machining device (50),
the second machining device (50) including a rotary blade (50b) that cuts the intermediate sheet (Sh1) in the same direction as a cutting direction at the cutting position while conveying the intermediate sheet (Sh1) in a second direction,
the processing job generation program causing the integrated circuit to execute:
acquiring layout information that is information regarding a position of the product disposed on the sheet (Sh);
searching for at least one candidate for the cutting position based on the layout information;
selecting, from among the at least one candidate for the cutting position, a candidate that can be processed by the first machining device (20) and the second machining device (50) and has a small number of cutting positions based on a maximum size of a first margin region between a contour of the sheet (Sh) and a contour of the product in the first direction, the first margin region being dischargeable by the first machining device (20), and a maximum size and a minimum size of the intermediate sheet (Sh1) in the first direction, the intermediate sheet (Sh1) being conveyable by the second machining device (50);
generating the processing job for performing processing at the selected cutting position;
in a case where the sheet (Sh) is able to be cut by either the first machining device (20) or the rotary blade (50b), from among the at least one candidate for the cutting position, selecting a candidate that requires a lower number of times of cutting by the first machining device (20), and generating the processing job for performing processing at the selected cutting position.

## Patentansprüche

1. Vorrichtung zum Erzeugen einer Verarbeitungsaufgabe (70) in einem Blattverarbeitungssystem (1), wobei das Blattverarbeitungssystem (1) eine erste Bearbeitungsvorrichtung (20), die ein Blatt (Sh), auf dem zumindest ein Produkt angeordnet ist, in eine erste Richtung, die eine Förderrichtung der ersten Bearbeitungsvorrichtung (20) ist, bewegt, das Blatt (Sh) an zumindest einer Schneidposition gemäß einer Verarbeitungsaufgabe schneidet und ein Zwischenblatt (Sh1) ausgibt; und eine zweite Bearbeitungsvorrichtung (50) umfasst, die das Zwischenblatt (Sh1), das aus der ersten Bearbeitungsvorrichtung (20) ausgegeben wurde, gemäß der Verarbeitungsaufgabe verarbeitet, und das Produkt ausgibt, wobei die Vorrichtung zum Erzeugen der Verarbeitungsaufgabe (70) die Verarbeitungsaufgabe erzeugt, die eine Anweisung zum Verarbeiten von Inhalten gibt, die durch jede aus der ersten Bearbeitungsvorrichtung (20) und der zweiten Bearbeitungsvorrichtung (50) durchzuführen ist,
wobei die zweite Bearbeitungsvorrichtung (50) eine Rollklinge (50b) umfasst, die das Zwischenblatt (Sh1) in dieselbe Richtung wie eine Schneidrichtung an der Schneidposition schneidet, während das Zwischenblatt (Sh1) in eine zweite Richtung bewegt wird,
wobei die Vorrichtung zum Erzeugen einer Verarbeitungsaufgabe (70) nach zumindest einem Kandidaten für die Schneidposition basierend auf Layoutinformationen sucht, die Informationen betreffend eine Position des Produkts sind, das auf dem Blatt (Sh) angeordnet ist,
aus dem zumindest einen Kandidaten für die Schneidposition einen Kandidaten auswählt, der durch die erste Bearbeitungsvorrichtung (20) und die zweite Bearbeitungsvorrichtung (50) verarbeitet werden kann und eine kleine Anzahl von Schneidpositionen basierend auf einer maximalen Größe eines ersten Randbereichs zwischen einem Umriss des Blatts (Sh) und einem Umriss des Produkts in der ersten Richtung, wobei der erste Randbereich durch die erste Bearbeitungsvorrichtung (20) ausgebbar ist, und eine maximale Größe und eine minimale Größe des Zwischenblatts (Sh1) in der ersten Richtung aufweist, wobei das Zwischenblatt (Sh1) durch die zweite Bearbeitungsvorrichtung (50) bewegbar ist, und
die Verarbeitungsaufgabe zum Durchführen einer Verarbeitung an der ausgewählten Schneidposition erzeugt und
die Vorrichtung zum Erzeugen einer Verarbeitungsaufgabe (70), in einem Fall, in dem das Blatt (Sh) dazu in der Lage ist, entweder durch die erste Bearbeitungsvorrichtung (20) oder die Rollklinge (50b) geschnitten zu werden, einen Kandidaten aus dem zumindest einen Kandidaten für die Schneidposition auswählt, der eine niedrigere Anzahl von Malen des Schneidens durch die erste Bearbeitungsvorrichtung (20) erfordert, und die Verarbeitungsaufgabe zum Durchführen einer Verarbeitung an der ausgewählten Schneidposition erzeugt.

2. Vorrichtung zum Erzeugen einer Verarbeitungsaufgabe (70) nach Anspruch 1, wobei in einem Fall, in dem das Blatt (Sh) in der ersten Bearbeitungsvorrichtung (20) in eine Vielzahl der Zwischenblätter (Sh1) geteilt wird,
wobei basierend auf Layoutinformationen, die angegeben sind und Informationen betreffend eine Position des Produkts sind, das auf dem Blatt (Sh) angeordnet ist,
einer maximalen Größe und einer minimalen Größe der Zwischenblätter (Sh1) in der ersten Richtung, wobei die Zwischenblätter (Sh1) durch die zweite Verarbeitungsvorrichtung (50) bewegbar sind,
einer maximalen Größe und einer minimalen Größe in der ersten Richtung eines zweiten Randbereichs zwischen einem Umriss der Zwischenblätter (Sh1), die durch die zweite Bearbeitungsvorrichtung (50) verarbeitet werden können, und einem Umriss des Produkts und
einer Größe des Produkts
die Vorrichtung zum Erzeugen der Verarbeitungsaufgabe (70) neue Layoutinformationen erzeugt, nach zumindest einem Kandidaten für die Schneidposition basierend auf den neuen Layoutinformationen sucht und die Verarbeitungsaufgabe erzeugt.

3. Vorrichtung zum Erzeugen einer Verarbeitungsaufgabe (70) nach Anspruch 2, wobei die Vorrichtung zum Erzeugen der Verarbeitungsaufgabe (70) die neuen Layoutinformationen erzeugt, sodass ein Layout jedes der Produkte auf der Vielzahl von Zwischenblättern (Sh1) zu demselben aus der Vielzahl von Zwischenblättern (Sh1) wird.

4. Vorrichtung zum Erzeugen einer Verarbeitungsaufgabe (70) nach Anspruch 1, wobei die Vorrichtung zum Erzeugen der Verarbeitungsaufgabe (70)
Kandidaten für die Schneidposition basierend auf einer maximalen Größe in der ersten Richtung, die durch die erste Bearbeitungsvorrichtung (20) ausgegeben werden kann,
einer maximalen Größe und einer minimalen Größe in der ersten Richtung des Zwischenblatts (Sh1), das durch die zweite Bearbeitungsvorrichtung (50) bewegt werden kann, und
einer maximalen Größe und einer minimalen Größe in der ersten Richtung eines zweiten Randbereichs zwischen einem Umriss des Zwischenblatts (Sh1), das durch die zweite Bearbeitungsvorrichtung (50) verarbeitet werden kann, und einem Umriss des Produkts korrigiert und
einen Kandidaten, der eine kleine Anzahl von Schneidpositionen aufweist, die durch die erste Bearbeitungsvorrichtung (20) und die zweite Bearbeitungsvorrichtung (50) verarbeitet werden können, aus den Kandidaten für die Schneidposition auswählt.

5. Vorrichtung zum Erzeugen einer Verarbeitungsaufgabe (70) nach Anspruch 1, wobei
in einem Fall, in dem das Blatt (Sh) in eine Vielzahl von Zwischenblättern (Sh1) in der ersten Bearbeitungsvorrichtung (20) geteilt ist,
basierend auf Layoutinformationen, die angegeben sind und Informationen betreffend eine Position des Produkts sind, das auf dem Blatt (Sh) angeordnet ist,
einer maximalen Größe und einer minimalen Größe der Zwischenblätter (Sh1) in der ersten Richtung, wobei die Zwischenblätter (Sh1) durch die zweite Bearbeitungsvorrichtung (50) bewegbar sind,
einer maximalen Größe und einer minimalen Größe in der ersten Richtung des zweiten Randbereichs der Zwischenblätter (Sh1), die durch die zweite Bearbeitungsmaschine (50) verarbeitet werden können,
einer maximalen Größe und einer minimalen Größe in der ersten Richtung eines dritten Randbereichs zwischen Produkten, die auf dem einen Zwischenblatt (Sh1) angeordnet sind, das durch die zweite Bearbeitungsvorrichtung (50) verarbeitet werden kann, und die an benachbarten Positionen angeordnet sind und
einer Größe der Produkte,
die Vorrichtung zum Erzeugen einer Verarbeitungsaufgabe (70) neue Layoutinformationen erzeugt, nach zumindest einem Kandidaten für die Schneidposition basierend auf den neuen Layoutinformationen sucht und die Verarbeitungsaufgabe erzeugt.

6. Vorrichtung zum Erzeugen einer Verarbeitungsaufgabe (70) nach Anspruch 1, wobei die Vorrichtung zum Erzeugen einer Verarbeitungsaufgabe (70) eine Verarbeitungsaufgabe erzeugt, in der eine Schneidposition zwischen einem vorderen Ende des Blatts (Sh) und einem Produkt auf einer vordersten Endseite in der ersten Richtung eingestellt ist.

7. Blattverarbeitungssystem (1), umfassend:
eine erste Bearbeitungsvorrichtung (20), die ein Blatt (Sh), auf dem zumindest ein Produkt angeordnet ist, gemäß einer Verarbeitungsaufgabe verarbeitet und ein Zwischenblatt (Sh1) ausgibt;
eine zweite Bearbeitungsvorrichtung (50), die das Zwischenblatt (Sh1), das aus der ersten Bearbeitungsvorrichtung (20) ausgegeben wurde, gemäß der Verarbeitungsaufgabe verarbeitet und ein Produkt ausgibt; und
eine Vorrichtung zum Erzeugen einer Verarbeitungsaufgabe nach Anspruch 1, wobei:
die erste Bearbeitungsvorrichtung (20) Folgendes umfasst:
eine erste Fördereinheit, die das Blatt (Sh) in eine erste Richtung bewegt; und
ein Schneidelement, das das Blatt (Sh), das in die erste Richtung bewegt wurde, an zumindest einer Schneidposition, die als die Verarbeitungsaufgabe eingestellt ist, in einer zweiten Richtung orthogonal zu der ersten Richtung schneidet, um das Blatt (Sh) in eine Vielzahl der Zwischenblätter (Sh1) zu teilen oder um das Blatt (Sh) in einen Rand, der das Produkt nicht beinhaltet, und das Zwischenblatt (Sh1), das das Produkt beinhaltet, zu teilen,
wobei die zweite Bearbeitungsvorrichtung (50) Folgendes umfasst:
eine zweite Fördereinheit, die das Zwischenblatt (Sh1), das aus der ersten Bearbeitungsvorrichtung (20) ausgegeben wurde, in die zweite Richtung bewegt; und
eine Bearbeitungsvorrichtung, die das Zwischenblatt (Sh1), das durch die zweite Fördereinheit bewegt wurde, verarbeitet.

8. Blattnverarbeitungssystem (1) nach Anspruch 7, wobei
in einem Fall, in dem das Blatt (Sh) in eine Vielzahl der Zwischenblättern (Sh1) in der ersten Bearbeitungsvorrichtung (20) geteilt ist,
basierend auf Layoutinformationen, die angegeben sind und Informationen betreffend eine Position des Produkts, das auf dem Blatt (Sh) angeordnet ist,
einer maximalen Größe und einer minimalen Größe der Zwischenblätter (Sh1) in der ersten Richtung, wobei die Zwischenblätter (Sh1) durch die zweite Bearbeitungsvorrichtung (50) bewegbar sind,
einer maximalen Größe und einer minimalen Größe in der ersten Richtung eines zweiten Randbereichs zwischen einem Umriss der Zwischenblätter (Sh1), die durch die zweite Bearbeitungsvorrichtung (50) verarbeitet werden können, und einem Umriss des Produkts und
einer Größe des Produkts
die Vorrichtung zum Erzeugen einer Verarbeitungsaufgabe (70) neue Layoutinformationen erzeugt, nach zumindest einem Kandidaten für die Schneidposition basierend auf den neuen Layoutinformationen sucht und die Verarbeitungsaufgabe erzeugt.

9. Blattverarbeitungssystem (1) nach Anspruch 8, wobei die Vorrichtung zum Erzeugen einer Verarbeitungsaufgabe (70) die neuen Layoutinformationen erzeugt, sodass ein Layout jedes der Produkte auf der Vielzahl von Zwischenblättern (Sh1) zu demselben unter der Vielzahl aus Zwischenblättern (Sh1) wird.

10. Blattverarbeitungssystem (1) nach Anspruch 7, wobei
die Vorrichtung zum Erzeugen der Verarbeitungsaufgabe (70)
Kandidaten für die Schneidposition basierend auf einer maximalen Größe in der ersten Richtung, die durch die erste Bearbeitungsvorrichtung (20) ausgegeben werden kann,
einer maximalen Größe und einer minimalen Größe in der ersten Richtung des Zwischenblatts (Sh1), das durch die zweite Bearbeitungsvorrichtung (50) bewegt werden kann, und
einer maximalen Größe und einer minimalen Größe in der ersten Richtung eines zweiten Randbereichs zwischen einem Umriss des Zwischenblatts (Sh1), das durch die zweite Bearbeitungsvorrichtung (50) verarbeitet werden kann, und einem Umriss des Produkts, korrigiert und
einen Kandidaten, der eine kleine Anzahl von Schneidpositionen aufweist, die durch die erste Bearbeitungsvorrichtung (20) und die zweite Bearbeitungsvorrichtung (50) verarbeitet werden können, aus den Kandidaten für die Schneidposition auswählt.

11. Blattverarbeitungssystem (1) nach Anspruch 7, wobei
in einem Fall, in dem das Blatt (Sh) in eine Vielzahl von Zwischenblättern (Sh1) in der ersten Bearbeitungsvorrichtung (20) geteilt wird,
basierend auf Layoutinformationen, die angegeben sind und Informationen in Hinblick auf eine Position des Produkts, das auf dem Blatt (Sh) angeordnet ist,
einer maximalen Größe und einer minimalen Größe der Zwischenblätter (Sh1), die durch die zweite Bearbeitungsvorrichtung (50) bewegbar sind,
einer maximalen Größe und einer minimalen Größe in der ersten Richtung des zweiten Grenzbereichs der Zwischenblätter (Sh1), die durch die zweite Bearbeitungsvorrichtung (50) verarbeitet werden können,
einer maximalen Größe und einer minimalen Größe in der ersten Richtung eines dritten Grenzbereichs zwischen Produkten, die auf dem einen Zwischenblatt (Sh1) angeordnet sind, das durch die zweite Bearbeitungsvorrichtung (50) verarbeitet werden kann, und die an benachbarten Positionen angeordnet sind, und
einer Größe der Produkte,
die Vorrichtung zum Erzeugen einer Verarbeitungsaufgabe (70) neue Layoutinformationen erzeugt, nach zumindest einem Kandidaten für die Schneidposition basierend auf den neuen Layoutinformationen sucht und die Verarbeitungsaufgabe erzeugt.

12. Blattverarbeitungsvorrichtung (1) nach Anspruch 7, wobei die Vorrichtung zum Erzeugen einer Verarbeitungsaufgabe eine Verarbeitungsaufgabe erzeugt, in der eine Schneidposition zwischen einem vorderen Ende des Blatts (Sh) und einem Produkt auf einer vordersten Endseite in der ersten Richtung eingestellt ist.

13. Blattverarbeitungsvorrichtung (1) nach Anspruch 7, wobei
das Schneidelement eine erste Rollklinge umfasst, die sich in die zweite Richtung bewegt, und
die Bearbeitungsvorrichtung eine Klinge vom Guillotine-Typ, die das Zwischenblatt (Sh1), das in die zweite Richtung bewegt wird, in der ersten Richtung schneidet, und eine zweite Rollklinge umfasst, die das Zwischenblatt (Sh1) in der zweiten Richtung schneidet und in Hinblick auf die Position in die erste Richtung einstellbar ist.

14. Verarbeitungsaufgabe-Erzeugungsprogramm, umfassend Befehle, die, wenn sie durch eine integrierte Schaltung ausgeführt werden, bewirken, dass die integrierte Schaltung in einem Blattverarbeitungssystem (1), das Folgendes umfasst: eine erste Bearbeitungsvorrichtung (20), die ein Blatt (Sh), auf dem zumindest ein Produkt angeordnet ist, in eine erste Richtung, die eine Förderrichtung der ersten Bearbeitungsvorrichtung (20) ist, bewegt, das Blatt (Sh) an zumindest einer Schneidposition gemäß einer Verarbeitungsaufgabe schneidet und ein Zwischenblatt (Sh1) ausgibt; und eine zweite Bearbeitungsvorrichtung (50) umfasst, die das Zwischenblatt (Sh1), das aus der ersten Bearbeitungsvorrichtung (20) ausgegeben wurde, gemäß der Verarbeitungsaufgabe verarbeitet, und ein Produkt ausgibt, die Verarbeitungsaufgabe erzeugt, die eine Anweisung zur Verarbeitung von Inhalten gibt, die durch jede aus der ersten Bearbeitungsvorrichtung (20) und der zweiten Bearbeitungsvorrichtung (50) durchzuführen ist,
wobei die zweite Bearbeitungsvorrichtung (50) eine Rollklinge (50b) umfasst, die das Zwischenblatt (Sh1) in dieselbe Richtung wie eine Schneidrichtung an der Schneidposition schneidet, während das Zwischenblatt (Sh1) in eine zweite Richtung bewegt wird,
wobei das Verarbeitungsaufgaben-Erzeugungsprogramm bewirkt, dass die integrierte Schaltung Folgendes ausführt:
Erfassen von Layoutinformationen, die Informationen betreffend eine Position des Produkts sind, das auf dem Blatt (Sh) angeordnet ist;
Suchen nach zumindest einem Kandidaten für die Schneidposition basierend auf den Layoutinformationen;
Auswählen eines Kandidaten aus dem zumindest einen Kandidaten für die Schneidposition, der durch die erste Bearbeitungsvorrichtung (20) und die zweite Bearbeitungsvorrichtung (50) verarbeitet werden kann und eine kleine Anzahl von Schneidpositionen basierend auf einer maximalen Größe eines ersten Randbereichs zwischen einem Umriss des Blatts (Sh) und einem Umriss des Produkts in der ersten Richtung und einer maximalen Größe und einer minimalen Größe des Zwischenblatts (Sh1) in der ersten Richtung aufweist, wobei das Zwischenblatt (Sh1) durch die zweite Bearbeitungsvorrichtung (50) bewegbar ist;
Erzeugen der Verarbeitungsaufgabe zum Durchführen einer Verarbeitung an der ausgewählten Schneidposition;
in einem Fall, in dem das Blatt (Sh) dazu in der Lage ist, entweder durch die erste Bearbeitungsvorrichtung (20) oder die Rollklinge (50b) geschnitten zu werden, Auswählen eines Kandidaten aus dem zumindest einen Kandidaten für die Schneidposition, Auswählen eines Kandidaten, der eine niedrigere Anzahl von Malen des Schneidens durch die erste Bearbeitungsvorrichtung (20) erfordert und Erzeugen der Verarbeitungsaufgabe zum Durchführen der Verarbeitung an der ausgewählten Schneidposition.

## Revendications

1. Dispositif de génération de tâche de traitement (70) dans un système de traitement de feuille (1), le système de traitement de feuille (1) incluant un premier dispositif d'usinage (20) qui transporte une feuille (Sh) sur laquelle au moins un produit est disposé dans une première direction qui est une direction de transport du premier dispositif d'usinage (20), découpe la feuille (Sh) dans au moins une position de découpe selon une tâche de traitement, et décharge une feuille intermédiaire (Sh1) ; et un second dispositif d'usinage (50) qui traite la feuille intermédiaire (Sh1) déchargée du premier dispositif d'usinage (20) selon la tâche de traitement, et décharge le produit, le dispositif de génération de tâche de traitement (70) générant la tâche de traitement qui donne une instruction sur le contenu de traitement à effectuer par chacun du premier dispositif d'usinage (20) et du second dispositif d'usinage (50),
le second dispositif d'usinage (50) incluant une lame rotative (50b) qui découpe la feuille intermédiaire (Sh1) dans la même direction qu'une direction de découpe dans la position de découpe tout en transportant la feuille intermédiaire (Sh1) dans une seconde direction,
le dispositif de génération de tâche de traitement (70) recherche au moins un candidat pour la position de découpe sur la base d'informations de disposition qui sont des informations concernant une position du produit disposé sur la feuille (Sh),
parmi le au moins un candidat pour la position de découpe, sélectionne un candidat qui peut être traité par le premier dispositif d'usinage (20) et le second dispositif d'usinage (50) et présente un petit nombre de positions de découpe sur la base d'une taille maximale d'une première région de marge entre un contour de la feuille (Sh) et un contour du produit dans la première direction, la première région de marge pouvant être déchargée par le premier dispositif d'usinage (20), et d'une taille maximale et d'une taille minimale de la feuille intermédiaire (Sh1) dans la première direction, la feuille intermédiaire (Sh1) pouvant être transportée par le second dispositif d'usinage (50), et
génère la tâche de traitement pour effectuer le traitement dans la position de découpe sélectionnée, et
le dispositif de génération de tâche de traitement (70), dans un cas dans lequel la feuille (Sh) peut être découpée par le premier dispositif d'usinage (20) ou la lame rotative (50b), parmi le au moins un candidat pour la position de découpe, sélectionne un candidat qui nécessite un nombre inférieur de découpes par le premier dispositif d'usinage (20), et génère la tâche de traitement pour effectuer un traitement dans la position de découpe sélectionnée.

2. Dispositif de génération de tâche de traitement (70) selon la revendication 1, dans lequel dans un cas dans lequel la feuille (Sh) est divisée en une pluralité de feuilles intermédiaires (Sh1) dans le premier dispositif d'usinage (20),
sur la base des informations de disposition qui sont données et sont des informations concernant une position du produit disposé sur la feuille (Sh),
d'une taille maximale et d'une taille minimale des feuilles intermédiaires (Sh1) dans la première direction, les feuilles intermédiaires (Sh1) pouvant être transportées par le second dispositif d'usinage (50),
d'une taille maximale et d'une taille minimale dans la première direction d'une deuxième région de marge entre un contour des feuilles intermédiaires (Sh1) pouvant être traitées par le second dispositif d'usinage (50) et un contour du produit, et
d'une taille du produit,
le dispositif de génération de tâche de traitement (70) crée de nouvelles informations de disposition, recherche au moins un candidat pour la position de découpe sur la base des nouvelles informations de disposition, et génère la tâche de traitement.

3. Dispositif de génération de tâche de traitement (70) selon la revendication 2, dans lequel le dispositif de génération de tâche de traitement (70) génère les nouvelles informations de disposition de telle sorte qu'une disposition de chacun des produits sur la pluralité de feuilles intermédiaires (Sh1) devient la même parmi la pluralité de feuilles intermédiaires (Sh1).

4. Dispositif de génération de tâche de traitement (70) selon la revendication 1, dans lequel le dispositif de génération de tâche de traitement (70)
corrige des candidats pour la position de découpe sur la base d'une taille maximale dans la première direction qui peut être déchargée par le premier dispositif d'usinage (20),
d'une taille maximale et d'une taille minimale dans la première direction de la feuille intermédiaire (Sh1) qui peut être transportée par le second dispositif d'usinage (50), et
d'une taille maximale et d'une taille minimale dans la première direction d'une deuxième région de marge entre un contour de la feuille intermédiaire (Sh1) qui peut être traitée par le second dispositif d'usinage (50) et un contour du produit, et
sélectionne un candidat présentant un petit nombre de positions de découpe qui peut être traité par le premier dispositif d'usinage (20) et le second dispositif d'usinage (50) parmi les candidats pour la position de découpe.

5. Dispositif de génération de tâche de traitement (70) selon la revendication 1, dans lequel
dans un cas dans lequel la feuille (Sh) est divisée en une pluralité de feuilles intermédiaires (Sh1) dans le premier dispositif d'usinage (20),
sur la base des informations de disposition qui sont données et sont des informations concernant une position du produit disposé sur la feuille (Sh),
d'une taille maximale et d'une taille minimale des feuilles intermédiaires (Sh1) dans la première direction, les feuilles intermédiaires (Sh1) pouvant être transportées par le second dispositif d'usinage (50),
d'une taille maximale et d'une taille minimale dans la première direction de la deuxième région de marge des feuilles intermédiaires (Sh1) qui peuvent être traitées par le second dispositif d'usinage (50),
d'une taille maximale et d'une taille minimale dans la première direction d'une troisième région de marge entre des produits disposés sur la feuille intermédiaire (Sh1) qui peut être traitée par le second dispositif d'usinage (50) et disposés à des positions adjacentes, et
d'une taille des produits,
le dispositif de génération de tâche de traitement (70) crée de nouvelles informations de disposition, recherche au moins un candidat pour la position de découpe sur la base des nouvelles informations de disposition, et génère la tâche de traitement.

6. Dispositif de génération de tâche de traitement (70) selon la revendication 1, dans lequel le dispositif de génération de tâche de traitement (70) génère une tâche de traitement dans laquelle une position de découpe est définie entre une extrémité avant de la feuille (Sh) et un produit sur un côté d'extrémité la plus avant dans la première direction.

7. Système de traitement de feuille (1), comprenant :
un premier dispositif d'usinage (20) qui traite une feuille (Sh) sur laquelle au moins un produit est disposé selon une tâche de traitement, et décharge une feuille intermédiaire (Sh1) ;
un second dispositif d'usinage (50) qui traite la feuille intermédiaire (Sh1) déchargée du premier dispositif d'usinage (20) selon la tâche de traitement, et décharge un produit ; et
le dispositif de génération de tâche de traitement selon la revendication 1, dans lequel
le premier dispositif d'usinage (20) inclut :
une première unité de transport qui transporte la feuille (Sh) dans une première direction ; et
un dispositif de découpe qui découpe la feuille (Sh) transportée dans la première direction dans au moins une position de découpe définie comme la tâche de traitement dans une seconde direction orthogonale à la première direction pour diviser la feuille (Sh) en une pluralité de feuilles intermédiaires (Sh1), ou diviser la feuille (Sh) en une marge n'incluant pas le produit et la feuille intermédiaire (Sh1) incluant le produit,
le second dispositif d'usinage (50) inclut
une seconde unité de transport qui transporte la feuille intermédiaire (Sh1) déchargée du premier dispositif d'usinage (20) dans la seconde direction ; et
un appareil d'usinage qui traite la feuille intermédiaire (Sh1) transportée par la seconde unité de transport.

8. Système de traitement de feuille (1) selon la revendication 7, dans lequel
dans un cas dans lequel la feuille (Sh) est divisée en une pluralité de feuilles intermédiaires (Sh1) dans le premier dispositif d'usinage (20),
sur la base des informations de disposition qui sont données et sont des informations concernant une position du produit disposé sur la feuille (Sh),
d'une taille maximale et d'une taille minimale des feuilles intermédiaires (Sh1) dans la première direction, les feuilles intermédiaires (Sh1) pouvant être transportées par le second dispositif d'usinage (50),
d'une taille maximale et d'une taille minimale dans la première direction d'une deuxième région de marge entre un contour des feuilles intermédiaires (Sh1) pouvant être traitées par le second dispositif d'usinage (50) et un contour du produit, et
d'une taille du produit,
le dispositif de génération de tâche de traitement (70) crée de nouvelles informations de disposition, recherche au moins un candidat pour la position de découpe sur la base des nouvelles informations de disposition, et génère la tâche de traitement.

9. Système de traitement de feuille (1) selon la revendication 8, dans lequel le dispositif de génération de tâche de traitement (70) génère les nouvelles informations de disposition de telle sorte qu'une disposition de chacun des produits sur la pluralité de feuilles intermédiaires (Sh1) devient la même parmi la pluralité de feuilles intermédiaires (Sh1).

10. Système de traitement de feuille (1) selon la revendication 7, dans lequel
le dispositif de génération de tâche de traitement (70)
corrige des candidats pour la position de découpe sur la base d'une taille maximale dans la première direction qui peut être déchargée par le premier dispositif d'usinage (20),
d'une taille maximale et d'une taille minimale dans la première direction de la feuille intermédiaire (Sh1) qui peut être transportée par le second dispositif d'usinage (50), et
d'une taille maximale et d'une taille minimale dans la première direction d'une deuxième région de marge entre un contour de la feuille intermédiaire (Sh1) qui peut être traitée par le second dispositif d'usinage (50) et un contour du produit, et
sélectionne un candidat présentant un petit nombre de positions de découpe qui peut être traité par le premier dispositif d'usinage (20) et le second dispositif d'usinage (50) parmi les candidats pour la position de découpe.

11. Système de traitement de feuille (1) selon la revendication 7, dans lequel
dans un cas dans lequel la feuille (Sh) est divisée en une pluralité de feuilles intermédiaires (Sh1) dans le premier dispositif d'usinage (20),
sur la base des informations de disposition qui sont données et sont des informations concernant une position du produit disposé sur la feuille (Sh),
d'une taille maximale et d'une taille minimale des feuilles intermédiaires (Sh1) qui peuvent être transportées par le second dispositif d'usinage (50),
d'une taille maximale et d'une taille minimale dans la première direction de la deuxième région de marge des feuilles intermédiaires (Sh1) qui peuvent être traitées par le second dispositif d'usinage (50),
d'une taille maximale et d'une taille minimale dans la première direction d'une troisième région de marge entre des produits disposés sur la feuille intermédiaire (Sh1) qui peut être traitée par le second dispositif d'usinage (50) et disposés à des positions adjacentes, et
d'une taille des produits,
le dispositif de génération de tâche de traitement (70) crée de nouvelles informations de disposition, recherche au moins un candidat pour la position de découpe sur la base des nouvelles informations de disposition, et génère la tâche de traitement.

12. Système de traitement de feuille (1) selon la revendication 7, dans lequel le dispositif de génération de tâche de traitement génère une tâche de traitement dans laquelle une position de découpe est définie entre une extrémité avant de la feuille (Sh) et un produit sur un côté d'extrémité la plus avant dans la première direction.

13. Système de traitement de feuille (1) selon la revendication 7, dans lequel
le dispositif de découpe inclut une première lame rotative qui se déplace dans la seconde direction, et
l'appareil d'usinage inclut une lame de type guillotine qui découpe la feuille intermédiaire (Sh1) transportée dans la seconde direction dans la première direction, et une seconde lame rotative qui découpe la feuille intermédiaire (Sh1) dans la seconde direction et dont la position est ajustable dans la première direction.

14. Programme de génération de tâche de traitement comprenant des instructions qui, lorsque le programme est exécuté par un circuit intégré, amènent le circuit intégré à générer, dans un système de traitement de feuille (1) incluant :
un premier dispositif d'usinage (20) qui transporte une feuille (Sh) sur laquelle au moins un produit est disposé dans une première direction qui est une direction de transport du premier dispositif d'usinage (20), découpe la feuille (Sh) dans au moins une position de découpe selon une tâche de traitement, et décharge une feuille intermédiaire (Sh1) ; et un second dispositif d'usinage (50) qui traite la feuille intermédiaire (Sh1) déchargée du premier dispositif d'usinage (20) selon la tâche de traitement, et décharge un produit, la tâche de traitement qui donne une instruction sur le contenu de traitement à effectuer par chacun du premier dispositif d'usinage (20) et du second dispositif d'usinage (50),
le second dispositif d'usinage (50) incluant une lame rotative (50b) qui découpe la feuille intermédiaire (Sh1) dans la même direction qu'une direction de découpe dans la position de découpe tout en transportant la feuille intermédiaire (Sh1) dans une seconde direction,
le programme de génération de tâche de traitement amenant le circuit intégré à exécuter les étapes consistant à :
acquérir des informations de disposition qui sont des informations concernant une position du produit disposé sur la feuille (Sh) ;
rechercher au moins un candidat pour la position de découpe sur la base des informations de disposition ;
sélectionner, parmi le au moins un candidat pour la position de découpe, un candidat qui peut être traité par le premier dispositif d'usinage (20) et le second dispositif d'usinage (50) et présente un petit nombre de positions de découpe sur la base d'une taille maximale d'une première région de marge entre un contour de la feuille (Sh) et un contour du produit dans la première direction, la première région de marge pouvant être déchargée par le premier dispositif d'usinage (20), et d'une taille maximale et d'une taille minimale de la feuille intermédiaire (Sh1) dans la première direction, la feuille intermédiaire (Sh1) pouvant être transportée par le second dispositif d'usinage (50) ;
générer la tâche de traitement pour effectuer un traitement dans la position de découpe sélectionnée ;
dans un cas dans lequel la feuille (Sh) peut être découpée par le premier dispositif d'usinage (20) ou la lame rotative (50b), parmi le au moins un candidat pour la position de découpe, sélectionner un candidat qui nécessite un nombre inférieur de découpes par le premier dispositif d'usinage (20), et générer la tâche de traitement pour effectuer un traitement dans la position de découpe sélectionnée.
